(19)

**Europäisches Patentamt**
**European Patent Office**
**Office européen des brevets**

(11) **EP 4 653 923 A1**

(12) **EUROPEAN PATENT APPLICATION**

(43) Date of publication:
**26.11.2025** Bulletin 2025/48

(21) Application number: **25178051.6**

(22) Date of filing: **21.05.2025**

(51) International Patent Classification (IPC):
***G01V 1/30*** *(2006.01)* ***G01V 20/00*** *(2024.01)*

(52) Cooperative Patent Classification (CPC):
**G01V 20/00; G01V 1/302;** G01V 2210/642;
G01V 2210/66

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.05.2024 US 202463650261 P**

(71) Applicants:
 • **Services Pétroliers Schlumberger**
   **75007 Paris (FR)**
   Designated Contracting States:
   **FR**
 • **GeoQuest Systems B.V.**
   **2514 JG The Hague (NL)**
   Designated Contracting States:
   **AL AT BE BG CH CY CZ DE DK EE ES FI GB GR
   HR HU IE IS IT LI LT LU LV MC ME MK MT NL NO
   PL PT RO RS SE SI SK SM TR**

(72) Inventors:
 • **HOU, Tianjun**
   **92140 Clamart (FR)**
 • **RENAUDEAU, Julien**
   **1366 Lysaker (NO)**
 • **MALVESIN, Emmanuel**
   **34006 Montpellier (FR)**
 • **LIEW, Li Hong**
   **1366 Lysaker (NO)**
 • **NADALIN, Marius**
   **1366 Lysaker (NO)**

(74) Representative: **Schlumberger Intellectual
Property Department
Parkstraat 83
2514 JG Den Haag (NL)**

(54) **SYSTEMS AND METHODS FOR SUBSURFACE MODELING**

(57)    A method of modeling subsurface geology includes receiving interpreted data including fault data indicating at least one fault within the interpreted data, and geological feature data including a plurality of horizon picks indicating a subsurface geological feature. The method includes, based on the fault data, creating a dynamic kernel mask. The method includes generating a geological model using a horizon-fault machine learning (ML) model that is generated to process input geological feature data to predict continuous geological features across subsurface discontinuities based on applying the dynamic kernel mask to isolate continuous zones in the input geological feature data. The method also includes providing the geological model for simulating one or more properties of a geological feature indicated in the geological feature data.

FIG. 9

EP 4 653 923 A1

## Description

This application claims priority to and the benefit of United States Provisional Patent Application No. 63/650,261, filed on May 21, 2024, which is hereby incorporated by reference in its entirety.

## BACKGROUND OF THE DISCLOSURE

Wellbores may be drilled into a surface location or seabed for a variety of exploratory or extraction purposes. For example, a wellbore may be drilled to access fluids, such as liquid and gaseous hydrocarbons, stored in subterranean formations and to extract the fluids from the formations. Wellbores used to produce or extract fluids may be formed in earthen formations using earth-boring tools such as drill bits for drilling wellbores and reamers for enlarging the diameters of wellbores.

One of the key steps associated with forming, accessing or otherwise utilizing wellbores is the study of the subsurface, including reconstruction of geological models. These models are typically scalar functions defined over a 2-dimensional or 3-dimensional space of interest, and aim to represent elements such as rock unit boundaries, faults, horizons, and intrusion on a scale of meters to kilometers. These models may be valuable for tasks such as structural gridding, geological property modeling, reservoir flow simulation, and so forth. In this way, geological models are advantageous for various scientific and engineering purposes, including geological hazard forecasting and natural resource management.

## SUMMARY

In some embodiments, the techniques described herein relate to a method of modeling subsurface geology that includes receiving interpreted data including fault data indicating at least one fault within the interpreted data, and geological feature data including a plurality of horizon picks indicating a subsurface geological feature. The method includes, based on the fault data, creating a dynamic kernel mask. The method includes generating a geological model using a horizon-fault machine learning (ML) model that is generated to process input geological feature data to predict continuous geological features across subsurface discontinuities based on applying the dynamic kernel mask to isolate continuous zones in the input geological feature data. The method also includes providing the geological model for simulating one or more properties of a geological feature indicated in the geological feature data. In some embodiments, the method is performed by a computer system. In some embodiments, the method is performed as instructions stored on a computer-readable storage medium.

This summary is provided to introduce a selection of concepts that are further described in the detailed description. This summary is not intended to identify key or essential features of the claimed subject matter, nor is it intended to be used as an aid in limiting the scope of the claimed subject matter. Additional features and aspects of embodiments of the disclosure will be set forth herein, and in part will be obvious from the description, or may be learned by the practice of such embodiments.

## BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example embodiments, the embodiments will be described and explained with additional specificity and detail through the use of the accompanying drawings in which:

FIG. 1 is an example of a downhole system, according to at least one embodiment of the present disclosure;

FIG. 2A illustrates an example environment in which a subsurface modeling system is implemented, according to at least one embodiment of the present disclosure;

FIG. 2B illustrates an example implementation of a subsurface modeling system as described herein, according to at least one embodiment of the present disclosure;

FIG. 3 illustrates an example of interpreting sparse geological feature data and fault data from geological models, according to at least one embodiment of the present disclosure;

FIGS. 4A and 4B illustrate an example of generating kernel masks for isolating continuous zones in the geological formation data, according to at least one embodiment of the present disclosure;

FIG. 5 illustrates an example of utilizing the fault data to generate continuous zone maps that identify continuous zones for the sparse geological feature data, according to at least one embodiment of the present disclosure;

FIG. 6 illustrates an example of generating densified geological feature data based on sparse geological feature data and continuous zone maps, according to at least one embodiment of the present disclosure;

FIG. 7A illustrates a block diagram example of training a horizon-fault machine learning model, according to at least one embodiment of the present disclosure;

FIG. 7B illustrates a block diagram example of a loss model incorporating a topological loss for training the horizon-fault machine learning model;

FIGS. 8A and 8B illustrate an example workflow of using target imaging data to generate a target geological model using a horizon-fault ML model, according to at least one embodiment of the present disclosure;

FIG. 9 illustrates a flow diagram for a method or a series of acts for modeling subsurface geology, according to at least one embodiment of the present disclosure; and

FIG. 10 illustrate certain components that may be included within a computer system.

## DETAILED DESCRIPTION

The present disclosure relates to a system for generating geological models based on wellbore imaging data. For instance, a computer-implemented subsurface modeling system leverages a horizon-fault machine learning model for generating detailed horizon maps from interpreted data that include only sparse indications of identified layer horizons. To elaborate, the system facilitates generating geological feature data by (manually and/or automatically) selecting various horizon picks from a wellbore image which indicate various layers and/or horizons between layers in a sparse manner. Additionally, the system is particularly suited for processing imaging data of formations that have discontinuities, such as faults, which may cause the layers/horizons to be discontinuous at one or more locations. Based on the imaging data, the system generates fault data which indicates the location, orientation, and extent of one or more faults in the subsurface. The faults in the subsurface define various continuous zones within a given image, and the system identifies and utilizes continuous zone maps to indicate the locations of the various continuous zones.

In order to provide a richer input for the horizon-fault machine learning model, the system densifies the sparse geological feature data through interpolation techniques with various surrounding or neighboring pixels. The interpolation of a given pixel is limited to other pixels (horizon picks) which fall within the same continuous zone, ensuring a high accuracy and relevance of the interpolated data. In this way, the geological feature data may include only sparse information, but a densified version of the geological feature data can be provided as input data to generate the geological model. The system utilizes a dynamic kernel at the tensor level of the horizon-fault machine learning model. In particular, the system generates various kernel masks which mask off, for a given continuous zone, pixels of faults and other continuous zones such that the horizon-fault machine learning model learns and inferences based only on relevant information to the given continuous zone. In this way, the horizon-fault machine learning model efficiently and accurately generates geological models or horizon maps for indicated the various layers of the subsurface and horizons therebetween.

As will be discussed in further detail below, the present disclosure includes a number of practical applications having features described herein that provide benefits and/or solve problems associated with generating geological models and evaluating subsurface features. Some example benefits are discussed herein in connection with various features and functionalities provided by a subsurface modeling system implemented on one or more computing devices. It will be appreciated that benefits explicitly discussed in connection with one or more embodiments described herein are provided by way of example and are not intended to be an exhaustive list of all possible benefits of the subsurface modeling system.

For example, in various implementations, the subsurface modeling system implements machine learning models based on a U-Net neural network architecture that is specifically adapted for discontinuous geoscientific subsurface interpretation. Unlike conventional U-Net models that require deeper architectures (e.g., four, five, or more encoding-decoding levels) to capture complex features across the entire input domain, the present system implements a streamlined U-Net architecture with fewer levels (e.g., three). For instance, by using densified geological data, the convolutions of upper layers are more effective than when operating on sparse images, reducing the need for higher and/or upper U-net levels to convolve less meaningful, sparse data. Further, the ML architecture utilizes a dynamic kernel which is geologically constrained based on faults and continuous regions which focus model computation on local, relevant features rather than the full spatial domain. In this way, less architecture levels are needed to extract rich feature maps from the input image, resulting in machine learning models that are smaller, less complex, more efficient, and more readily deployable.

This reduction in architectural depth also results in the ML models operating based on fewer trainable/learned parameters, which reduces the computational complexity and memory footprint required to execute the model on a given hardware platform. Accordingly, the subsurface modeling system can operate with faster inference times and improved training efficiency, providing improvements in computing resource usage, and operational scalability. These benefits may be particularly advantageous in subsurface modeling applications where compute resources may be limited (e.g., in remote field deployments or edge computing environments).

The reduction in architectural depth and number of parameters is additionally facilitated by the use of masked kernel regions. For instance, by masking and/or focusing convolutions at tensor level, the machine learning models operates only on regions of interest (e.g., continuous zones identified during preprocessing) rather than across the full input image or volume, increasing the efficiency and effectiveness of each architectural level and enabling rich feature extraction based on less learned parameters/weights. This dynamic, targeted kernel application is also not feasibly performed by the human mind. Indeed, these dynamically masked operations are implemented at the tensor level using differentiable sampling and convolutional routines, and their impact cannot be replicated by mere human analysis. As such, the use of a dynamic kernel represent a technical improvement to data processing efficiency, leading to better model generalization and fewer artifacts in the output geologic interpretation.

Overall, the combined use of a compact U-Net architecture, targeted masked kernel processing, and densified input data enables the system to achieve high-accuracy subsurface geological predictions while consuming fewer computational resources. These system-level efficiencies constitute technical solutions to real-world problems and offer significant advantages over conventional systems that rely on deeper, more resource-intensive machine learning architectures and/or that require large-scale global feature extraction.

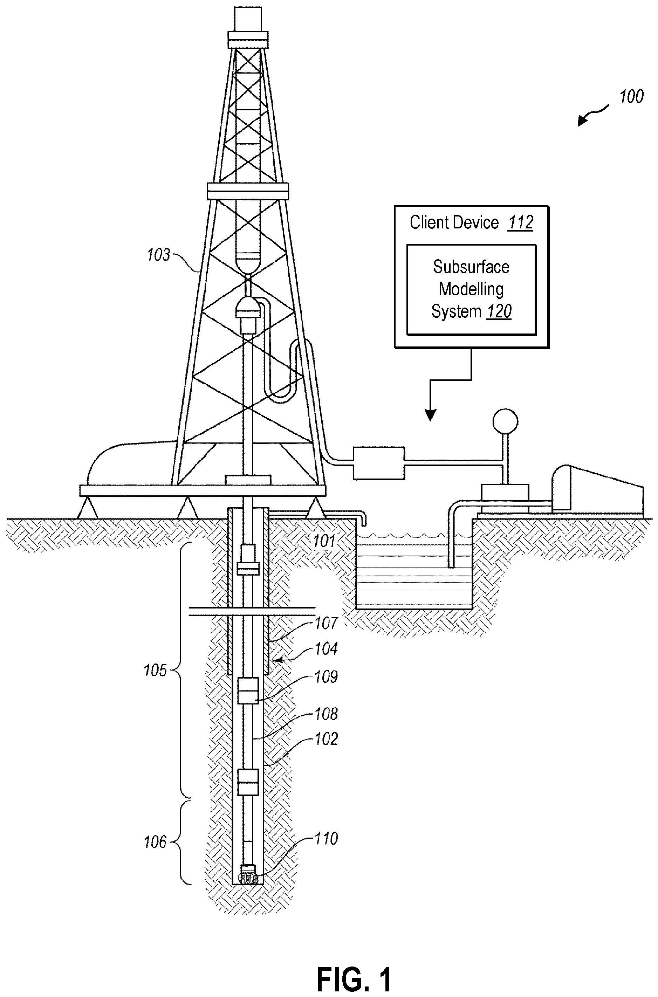

**FIG. 1** shows one example of a downhole system 100 for drilling an earth formation 101 to form a wellbore 102. The downhole system 100 includes a drill rig 103 used to turn a drilling tool assembly 104 which extends downward into the wellbore 102. The drilling tool assembly 104 may include a drill string 105, a bottomhole assembly ("BHA") 106, and a bit 110, attached to the downhole end of the drill string 105.

The drill string 105 may include several joints of drill pipe 108 connected end-to-end through tool joints 109. The drill string 105 transmits drilling fluid through a central bore and transmits rotational power from the drill rig 103 to the BHA 106. In some embodiments, the drill string 105 further includes additional downhole drilling tools and/or components such as subs, pup joints, etc. The drill pipe 108 provides a hydraulic passage through which drilling fluid is pumped from the surface. The drilling fluid discharges through selected-size nozzles, jets, or other orifices in the bit 110 for the purposes of cooling the bit 110 and cutting structures thereon, and for lifting cuttings out of the wellbore 102 as it is being drilled.

The BHA 106 may include the bit 110, other downhole drilling tools, or other components. An example BHA 106 may include additional or other downhole drilling tools or components (e.g., coupled between the drill string 105 and the bit 110). Examples of additional BHA components include drill collars, stabilizers, measurement-while-drilling ("MWD") tools, logging-while-drilling ("LWD") tools, downhole motors, underreamers, section mills, hydraulic disconnects, jars, vibration or dampening tools, other components, or combinations of the foregoing.

In general, the downhole system 100 may include other downhole drilling tools, components, and accessories such as special valves (e.g., kelly cocks, blowout preventers, and safety valves). Additional components included in the downhole system 100 may be considered a part of the drilling tool assembly 104, the drill string 105, or a part of the BHA 106, depending on their locations in the downhole system 100.

The bit 110 in the BHA 106 may be any type of bit suitable for degrading downhole materials. For instance, the bit 110 may be a drill bit suitable for drilling the earth formation 101. Example types of drill bits used for drilling earth formations are fixed-cutter or drag bits. In other embodiments, the bit 110 may be a mill used for removing metal, composite, elastomer, other materials downhole, or combinations thereof. For instance, the bit 110 may be used with a whipstock to mill into casing 107 lining the wellbore 102. The bit 110 may also be a junk mill used to mill away tools, plugs, cement, other materials within the wellbore 102, or combinations thereof. Swarf or other cuttings formed by use of a mill may be lifted to the surface 111 or may be allowed to fall downhole. The bit 110 may include one or more cutting elements for degrading the earth formation 101.

The BHA 106 may further include a rotary steerable system (RSS). The RSS may include directional drilling tools that change a direction of the bit 110, and thereby the trajectory of the wellbore. At least a portion of the RSS may maintain a geostationary position relative to an absolute reference frame, such as one or more of gravity, magnetic north, or true north. Using measurements obtained with the geostationary position, the RSS may locate the bit 110, change the course of the bit 110, and direct the directional drilling tools on a projected trajectory. The RSS may steer the bit 110 in accordance with or based on a trajectory for the bit 110. For example, a trajectory may be determined for directing the bit 110 toward one or more subterranean targets such as an oil or gas reservoir.

The downhole system 100 may include or may be associated with a client device 112 with a subsurface modeling system 120 implemented thereon (e.g., or with a client application implemented thereon for accessing the subsurface modeling system 120 as described herein). The subsurface modeling system 120 may facilitate generating geophysical models representing subsurface features.

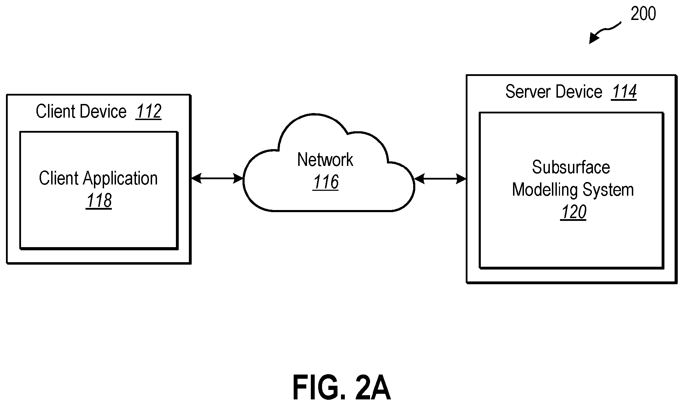

**FIG. 2A** illustrates an example environment 200 in which a subsurface modeling system 120 is implemented in accordance with one or more embodiments describe herein. As shown in **FIG. 2A,** the environment 200 includes a server device 114. The server device 114 may include one or more computing devices (e.g., including processing units, data storage, etc.) organized in an architecture with various network interfaces for connecting to and providing data management and distribution across one or more client systems. As shown in **FIG. 2A,** the server device 114 may be connected to and may communicate with (either directly or indirectly) a client device 112 through a network 116. The network 116 may include one or multiple networks and may use one or more communication platforms and/or technologies suitable for transmitting data. The network 116 may refer to any data link that enables transport of electronic data between devices of the environment 200. The network 116 may refer to a hardwired network, a wireless network, or a combination of a hardwired network and a wireless network. In one or more embodiments, the network 116 includes the internet. The network 116 may be configured to facilitate communication between the various computing devices via well-site information transfer standard markup language (WITSML) or similar protocol, or any other protocol or form of communication.

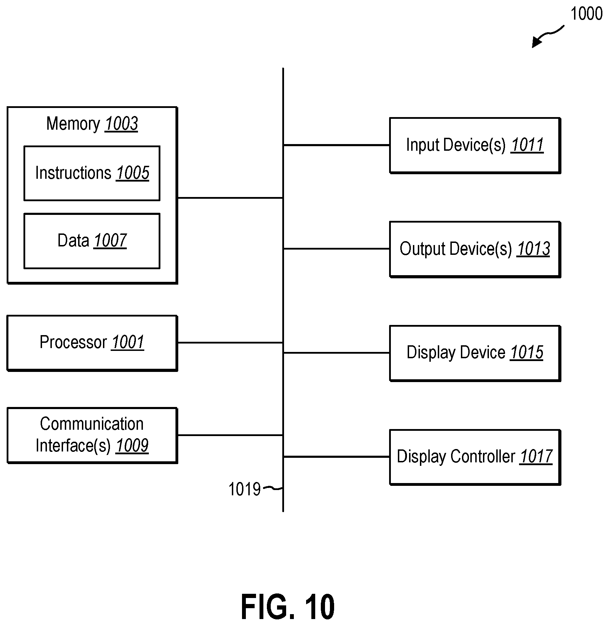

The client device 112 may be representative of one or multiple client devices, and may refer to various types of computing devices. For example, the client device 112 may include a mobile device such as a mobile telephone, a smartphone, a personal digital assistant (PDA), a tablet, a laptop, or any other portable device. Additionally, or alternatively, the client device 112 may include one or more non-mobile devices such as a desktop computer, server device, surface or downhole processor or computer (e.g., associated with a sensor, system, or function of the downhole system), or other non-portable device. In one or more implementations, the client device 112 includes graphical user interfaces (GUI) thereon (e.g., a screen of a mobile device). In addition, or as an alternative, one or more of the client device 112 may be communicatively coupled (e.g., wired or wirelessly) to a display device having a graphical user interface thereon for providing a display of system content. The server device 114 may similarly refer to various types of computing devices. Each of the devices of the environment 200 may include features and/or functionalities described below in connection with **FIG. 10.**

As shown in **FIG. 2A,** the environment 200 may include a subsurface modeling system 120 implemented on the server device 114. While shown on the server device 114, the subsurface modeling system 120 may be implemented wholly or in part on the client device 112, across the server device 114 and the client device 112, or on or across one or more additional devices, such that different portions or components of the subsurface modeling system 120 are implemented on different computing devices in the environment 200. The client device 112 may include a client application 118. The client application 118 may include an application or interface for interacting with and/or receiving the features of the subsurface modeling system 120 as described herein. In some embodiments, one or more of the functionalities or features of the subsurface modeling system 120 may be carried out or performed on or by the client application 118. In this way, the environment 200 may be a cloud computing environment, and the subsurface modeling system 120 may be implemented across one or more devices of the cloud computing environment in order to leverage the processing capabilities, memory capabilities, connectivity, speed, etc., that such cloud computing environments offer in order to facilitate the features and functionalities described herein.

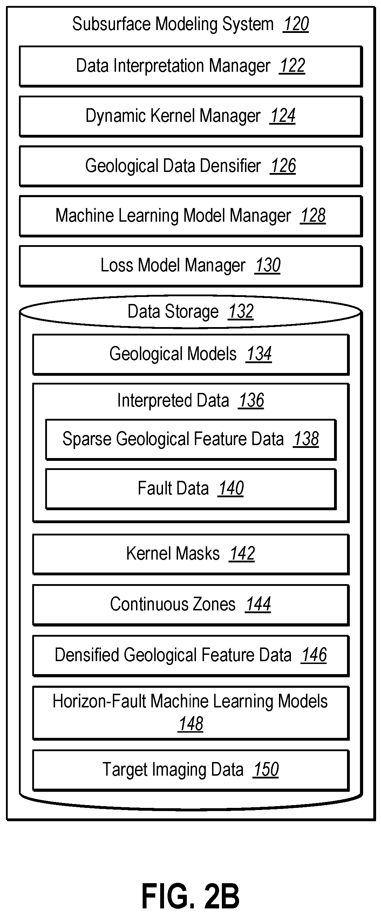

**FIG. 2B** illustrates an example implementation of the subsurface modeling system 120 as described herein, according to at least one embodiment of the present disclosure. The subsurface modeling system 120 may include various components, as well as functionalities which may be described with respect to the various components. For example, a data interpretation manager 122 may perform or facilitate interpreting faults and sparse geological feature data points from geological image data. A dynamic kernel manager 124 may facilitate implementing a dynamic kernel based on determining various kernel masks in which identified faults are masked from convolutional operations at the tensor level of machine learning operations. The subsurface modeling system 120 also includes a geological data densifier 126, which may generate densified geological feature data by populating empty or unassigned pixels by referencing neighboring pixel values.

The subsurface modeling system 120 may implement machine learning (ML) techniques for generating geological models of subsurface formations. For instance, a machine learning model manager 128 may train and implement one or more horizon-fault machine learning models 148 for automatically generating geological models based on sparse geological feature data and fault data obtained from a geological image. In some cases, the geological image is used to generate densified geological feature data and kernel masks for use as inputs to the horizon-fault ML models. A loss model manager 130 may facilitate training and/or fine-tuning the horizon-fault ML models in order that the geological models it creates are geologically possible and do not include closed-loop layer horizons or other geologically invalid features.

The subsurface modeling system 120 also includes a data storage 132 with various data stored thereon. For example, the data storage includes geological models 134 and interpreted data 136 including sparce geological feature data 138 and fault data 140. The data storage 132 includes kernel masks 142 and continuous zones 144 stored thereon, as well as densified geological feature data 146. The horizon-fault ML models 148 are stored on the data storage 132, as well as target imaging data 150 which may be the subject of the ML techniques described herein for generating corresponding geological models of the target imaging data 150.

While one or more embodiments described herein describe features and functionalities performed by the specific components 120-150 of the subsurface modeling system 120, it will be appreciated that specific features described in connection with one component of the subsurface modeling system 120 may, in some examples, be performed by one or more of the other components of the subsurface modeling system 120. Indeed, it will be appreciated that some or all of the specific components may be combined into other components and specific functions may be performed by one or across multiple components 120-150 of the subsurface modeling system 120.

Additionally, while **FIG. 1,** for example, depicts the subsurface modeling system 120 implemented on a client device 112 of the downhole system, it should be understood that some or all of the features and functionalities of the subsurface modeling system 120 may be implemented on or across multiple client devices 112 and/or server devices 114. Indeed, it will be appreciated that some or all of the specific components 120-150 may be implemented on or across multiple client devices 112 and/or server devices 114, including individual functions of a specific component being performed across multiple devices.

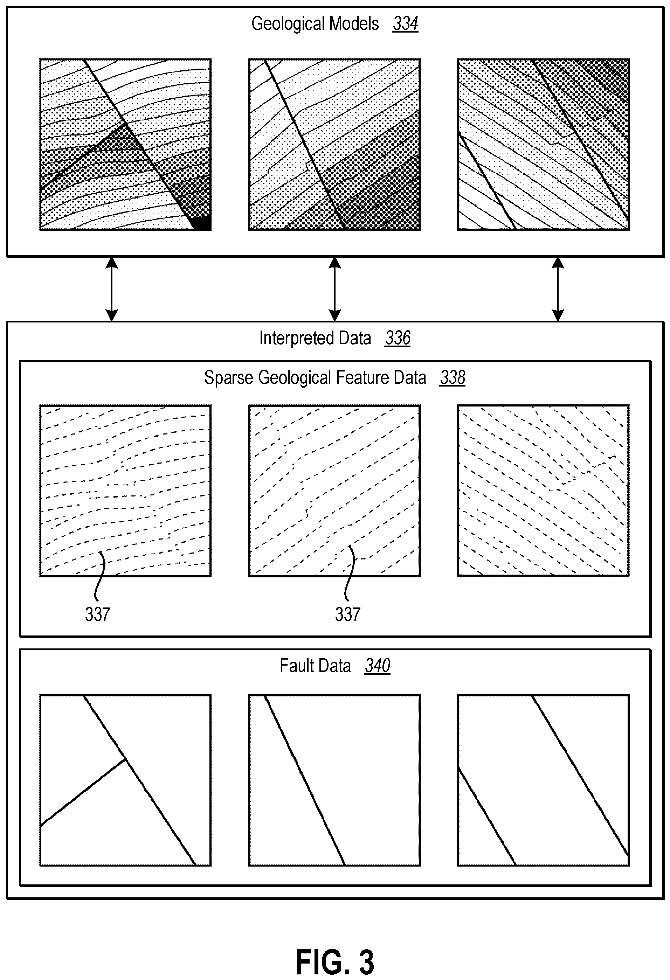

Turning now to **FIG. 3,** this figure illustrates an example of interpreting sparse geological feature data 338 and fault data 340 from geological models 334, according to at least one embodiment of the present disclosure. In some cases, the interpretation of the geological models 334 in this way is performed by or otherwise facilitated by the data interpretation manager 122 as described above.

As shown, **FIG. 3** includes the geological models 334. The geological models 334 may be models or representations of a subsurface formation, and may delineate or identify various features therein. For instance, the geological models 334 may be horizon maps which indicate (e.g., label) various layers and horizons therebetween. The layers may be continuous sections of the formation of a same make-up or rock-type. The geological models 334 may represent these layers as coherent surfaces, zones, boundaries, or other indications which may clearly indicate the subsurface makeup. The techniques described herein may be applicable to both 2- and 3-dimensional applications, and accordingly the geological models 334 may be 2- or 3-dimensional models of the subsurface formation. Accordingly, all other data, samples, and models as described herein may be implemented as 3-dimensional models, while 2-dimensional examples may be primarily discussed.

The geological models 334 may be created based on manual and/or expert interpretation and integration of downhole data, such as downhole imaging data (e.g., seismic data, resistivity data, acoustic data, or other imaging data). For instance, raw and/or minimally processed recordings of underground physical properties may be analyzed, examined, and/or processed to create the geological models 334 as detailed representations of the subsurface geology and in this way serve as the basis for understanding subsurface structure, stratigraphy, and potential resources. Accordingly, obtaining geological models may be beneficial for facilitating the exploration and extraction of underground resources. In many cases, generating the geological models 334 may be labor intensive, slow, computationally expensive, and/or difficult, and accordingly, techniques for more readily obtaining geological models may be advantageous.

In some cases, the geological models 334 may represent already-existing geological models and/or obtained geological models. For instance, the geological models 334 may be existing models which may be relied upon for generating training data as described herein for training ML models to generate new geological models from target imaging data. For instance, based on the geological models 334, interpreted data 336 may be generated.

As shown, the interpreted data 336 may include sparse geological feature data 338. The sparse geological feature data 338 may be an image (or volume in 3-dimensional applications) which indicates various horizons and/or layers in a sparse manner. For instance, the sparse geological feature data 338 may include various horizon picks 337 or sparse annotations that mark the positions of the geological boundaries within an image or volume of the geological models 334. The horizon picks 337 may be sparse in that they appear as individual labeled points, or short, connected traces, that follow the curvature of a horizon, but do not entirely delineate the horizon. For instance, rather than labeling the entire horizon continuously, only a limited number of points or traces may indicate each horizon. This may make the data set smaller and more computationally manageable, while also facilitating ease and efficiency for making the sparse geological feature data 338. For instance, in some cases the sparse geological feature data 338 is generated manually by manually selecting the horizon picks 337. This may be especially true in the context of making horizon picks 337 for target sparse geological feature data from target downhole imaging data as described in more detail below. By utilizing only sparse horizon picks 337, the subsurface modeling system described herein facilitates a more efficient labeling of the horizons in target imaging data, facilitating a less labor intensive process for generating target geological models via the horizon-fault ML models described herein.

In some cases, the horizon picks 337 are generated automatically from the geological models 334. For instance, because the geological model 334 is already generated and/or labeled with detailed information regarding formation layers and/or horizons, the data interpretation manager 122 may generate the sparse geological feature data 338 by randomly sampling the horizon lines indicated in the geological models 334. In this way, the geological models 334 may be interpreted to generate the sparse geological feature data 338 by making horizon picks 337.

Each horizon pick 337 may be associated with an integer class ID that identifies which geological boundary and/or layer it belongs to. For example, a pixel labeled with a value of " 1" may indicate a first or topmost layer or boundary, while a "2" may indicate a next horizon and so on. Any other numbering scheme may be used. In some cases, the class IDs are assigned based on a layer type, such as a shale layer, sand layer, etc. Accordingly, the horizon picks 337 of the sparse geological feature data 338 may be implemented as individual pixels or groups (lines) of pixels labeled with corresponding integer values for demarking the horizon lines. In this way, most pixels may be unlabeled, unassigned, or labeled with a "0" and only the horizon picks 337 may be assigned a specific integer class ID. For instance, in some cases the horizon picks 337 are sparse based on being selected at most at 2 picks per meter, 1 pick per meter, 1 pick per 2 meters, 1 pick per 3 meters, 1 pick per 5 meters, 1 pick per 10 meters, 1 pick per 15 meters, 1 pick per 20 meters, or any value therebetween. In some cases, horizon picks 337 are made specifically at no more than 1 pick per meter in order to facilitate the benefits of sparsely selecting data points, while ensuring enough data points to accurately generate a corresponding geological model as described herein. As mentioned above the sparse nature of this sparse geological feature data 338 may be advantageous in that the ML techniques described herein may be used to reconstruct full horizon maps/geological models from just a small set of sparse cues, reducing the overall amount of data to be generated (e.g., at the sparge geological feature data level) and processed.

As shown, the interpreted data 336 also includes fault data 340. The fault data 340 may be an image or volume which identifies the location and extent of one or more faults in the geological models 334. For example, a fault may be a structural discontinuity within the subsurface where geological layers have been offset or displaced. The fault data 340 may be labeled with corresponding pixels having values (e.g., 0's and 1's) corresponding to locations of the fault and locations in continuous regions. For instance, the fault data 340 may identify infinite faults (e.g., faults that extend through the scope or frame of the image) as well as finite faults (e.g., faults that originate or terminate within the scope or frame of the image). The fault data 340 may identify 1 fault or many faults for a given image. In this way, the fault data 340 may be formatted as a binary mask, with the fault labeled with one value and all other (non-fault) pixels labeled with another value (or no value).

In some cases, the fault data 340 may be generated manually, such as by a geologist or other expert interpreting the geological model 334 (e.g., or interpreting downhole imaging data in the context of inferencing as described in detail below) to observe shifts or offsets in horizon lines, abrupt changes in formation patterns, discontinuities in seismic reflectors, etc. In some cases, the fault data 340 can be generated automatically or semi-automatically by applying edge detection or coherence analysis to the geological models and/or downhole images (e.g., seismic images) to identify areas suggesting a structural break. In this way, whether created manually or with computational tools, the fault data 340 identifies the fault(s) in the geological models 334. Accordingly, based on the geological models 334, the interpreted data 336 is generated, which includes corresponding and/or labeled pairs of sparse geological feature data 338 and associated fault data 340.

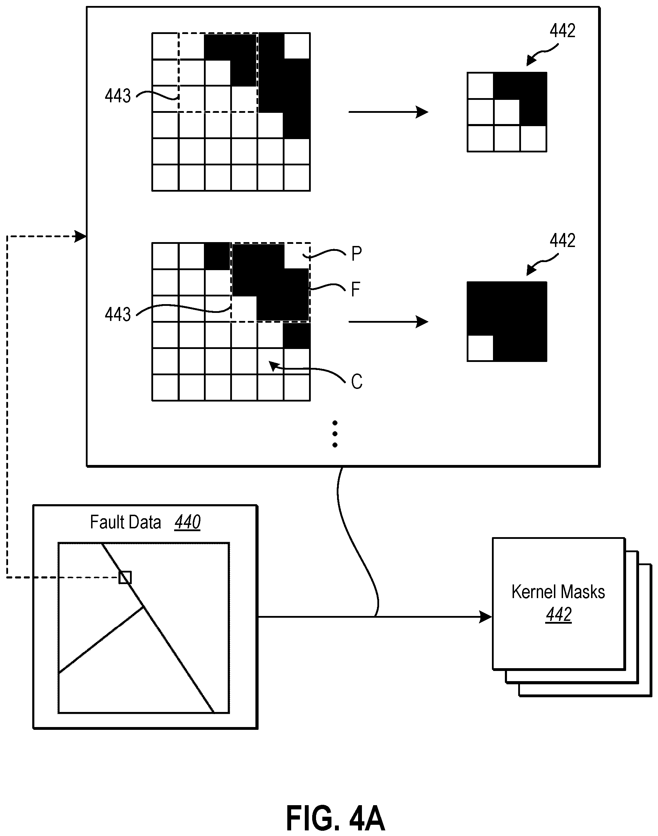

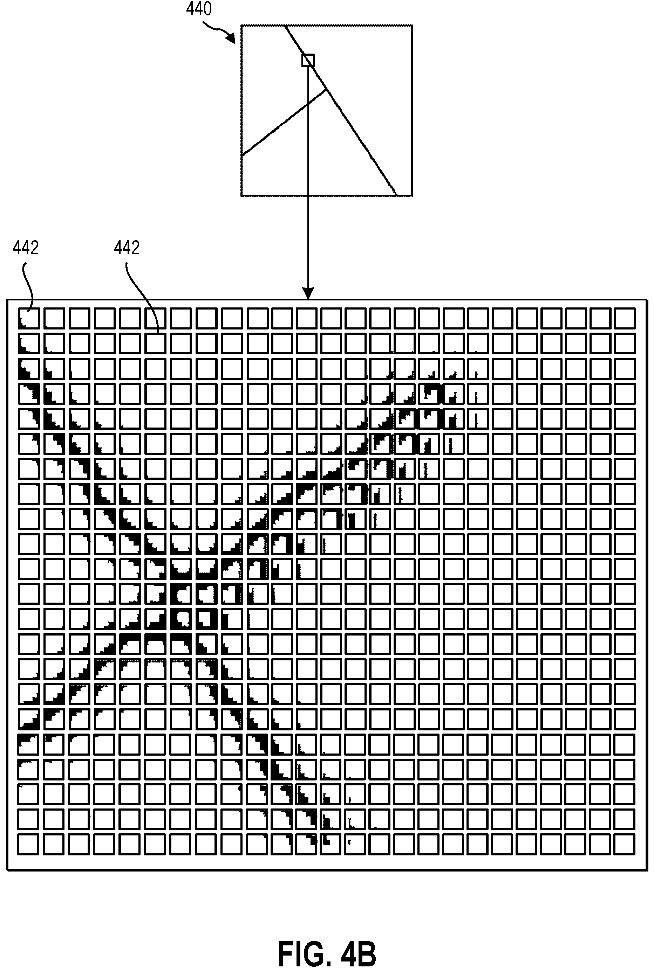

**FIGS. 4A** and **4B** illustrate an example of generating kernel masks for isolating continuous zones in the geological formation data, according to at least one embodiment of the present disclosure. The kernel masks 442 may be generated by the subsurface modeling system 120, and in particular, the dynamic kernel manager 124.

As shown, the subsurface modeling system 120 generates various kernel masks 442 based on the fault data 440. In ML contexts, and in particular in computer vision and imaging processing tasks utilizing convolutional neural networks (CNNs), a kernel is a small matrix of learnable weights used to scan over an input image and extract local features by performing element-wise multiplication and summation. The kernel is applied repeatedly across the image in a sliding-window fashion, allowing the neural network to detect patterns such as edges, textures, or shapes at different locations. In some cases, various passes with various different kernels may be utilized at a level of the neural network architecture for extracting different features as various activation maps. In this way, the kernel(s) facilitate the ML model learning spatially localized information in order to understand structure and patterns in visual data, such as the geological images described herein.

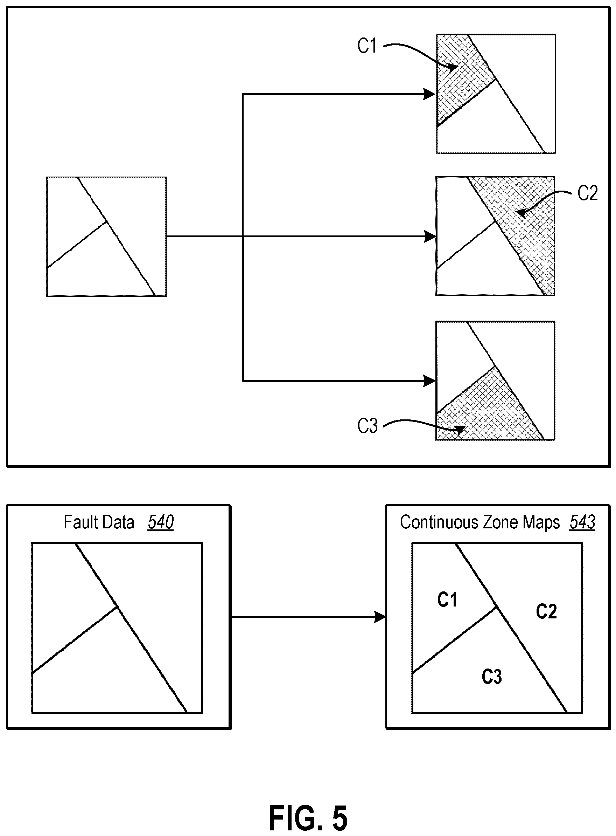

In some examples, the kernel masks 442 are filters that are generated dynamically for each position that the kernel(s) occupy when scanning an image. The kernel masks 442 are generated by utilizing the fault data 440 acting as a binary map to identify the fault zones. For instance, for every position 443 that the kernel occupies, a corresponding kernel-sized patch can be extracted from the (mask of the) fault data 440. For instance, the kernel masks 442 selectively disable (e.g., zero out) kernel weights or input pixels that fall on the fault(s) indicated in the fault data 440. In some cases, the kernel masks 442 are further generated to selectively disable pixels that fall across the fault boundary, such as pixels that correspond to zones that are discontinuous across the fault. An example of this is a pixel P that is located across a fault F, and is otherwise masked from consideration with a continuous zone C by the corresponding kernel mask 442. In this way, the kernel masks 442 may effectively cause the kernel to ignore information from different continuous zones. To achieve this, in some cases, the subsurface modeling system 120 may rely on the continuous zones as determined based on the fault data 440, and as shown and described in connection with **FIG. 5.**

In some cases, the kernel masks 442 are defined as follows:

$$M_{ij} = \begin{cases} 1, \text{if the pixel is in the same continuous zone as the central pixel} \\ 0, \text{if the pixel is not in the same continuous zone as the central pixel.} \end{cases}$$

In some embodiments, the kernel masks 442 are determined based on the following formula:

$$W_{masked} = W \circ M$$

$$X_{out} = \frac{K^2}{\sum M}(W_{masked} X_{kernel} + b)$$

where:

$W$, $W_{masked}$ are the unmasked and masked weights of the kernel;

M is the binary mask;
$K$ is the size of kernel;

$X_{kernel}$ is the input value of the kernel; and
$b$ is the bias.

In this way, the subsurface modeling system 120 generates the kernel masks 442 for isolating, at the kernel level, information pertaining to a same continuous zone. The subsurface modeling system 120 may accordingly generate a kernel mask 442 for every position 443 that the kernel occupies as it passes across an image as part of a convolutional and/or pooling operation of a machine learning operation. In some cases, the kernel masks 442 are shown and described as being generated prior to implementing input data to a horizon-fault ML model, such as an input to the ML model. This should be understood as representing that the kernel masks 442 may be generated in a prior manner in this way (and provided to the ML model), but may also be generated dynamically during operation of the ML model (e.g., by the ML model or other component of the subsurface modeling system 120) at the various steps or strides of the kernel across the input image.

In some cases, the kernel masks 442 may be applicable for an application of any kernel within a same level of a ML (e.g., U-Net) architecture. For instance, because various kernels may be applied to a same input image at a given level, the kernel masks 442 may be applicable for utilizing in connection with that input image and at that level regardless of which kernels (e.g., which weights) are used. Accordingly, the kernel masks 442 may be utilized in connection with various different kernels that may be applied across an image (e.g., the same image at the same level of the ML architecture), for example, having different weights for extracting different features to create distinct channels/activation maps.

In some cases, the subsurface modeling system 120 may generate a set of kernel masks 442 for multiple or all of the levels of the ML architecture. For example, through a pooling operation, the sparse geological feature data may be reduced to a lower dimensionality. The kernel masks 442 may be utilized in connection with a pooling kernel for this pooling operation, and additional the subsurface modeling system 120 may generate a set of kernel masks 442 applicable to the next level of the architecture (e.g., for the reduced dimensions of the input images at that level). For instance, the fault data 440 may be reduced in dimensions in a similar way such that the fault data 440 may again be utilized for generating kernel masks 442 for the smaller dimensionality of the next level of the architecture. Sets of kernel masks 442 may be generated in this way for any of the levels of the architecture.

Based on the kernel masks 442, convolutional and/or pooling kernels may be dynamic kernels and/or may be context-aware kernels at every spatial location. For instance, instead of applying the same fixed kernel (weights) uniformly across the image, the kernel masks 442 create a dynamic kernel which adapts its receptive field based on structural boundaries, ensuring that each convolution operation (or pooling operation) uses only the information from the same geologically continuous zone (e.g., doesn't use information across the fault). Put another way, the kernel masks 442 mask the input pixels and/or weights, modulating which parts of the local patch that the kernel sees contribute to the output. This is particularly advantageous near faults, where layer offsets could otherwise introduce misleading signals if not properly isolated. In this way, various continuous zones within an image (as defined by the fault(s)) may be processed and/or analyzed by the ML model based only on information located within the same continuous zone, leading to better inferencing of layer identifications for all of the continuous zones of an image. Indeed, by embedding structural awareness directly into the convolutional (and/or pooling) process, the ML techniques described herein can better learn to generate accurate representations in geologically complex regions.

**FIG. 5** illustrates an example of utilizing the fault data to generate continuous zone maps 543 that identify continuous zones C (e.g., C1, C2, C3, etc.) for the sparse geological feature data, according to at least one embodiment of the present disclosure. The continuous zones C are regions within a geological image where the subsurface features, such as horizons or formations, are uninterrupted by structural discontinuities like faults. To elaborate, the continuous zones C may be areas (or volumes for 3-dimensional cases) defined by faults in the image. In the continuous zones C, geological layers may tend to be spatially consistent and maintain their relative geometry. The continuous zones C may be important for accurate geological interpretations and modeling by defining areas where the integrity of layer relationships are preserved. At fault lines, and between two (or more) continuous zones, the geological layers may exhibit shifted, offset, or otherwise inconsistent spatial positioning of a given geological layer. Accordingly, as discussed above, it may be valuable in some cases to treat continuous zones in the image independently to ensure that the ML techniques described herein do not mix data from geologically unrelated regions, degrading accuracy.

As shown in **FIG. 5,** this example image of the fault data 540 includes two distinct faults, which segment the fault data image into three distinct continuous zones C1, C2, and C3. Accordingly, geological layers that span two (or more) of these continuous zones are likely consistent, uniform, and/or predictable within a given continuous zone, but may exhibit an abrupt shift for offset across continuous zones. In some cases, the subsurface modeling system 120 determines the continuous zones using ray tracing and/or region growing techniques. For instance, the subsurface modeling system 120 may select a starting point (e.g., a corner of the image, a random point, etc.) that is not located on a fault. From the starting point, the subsurface modeling system 120 may use a ray or region expansion algorithm to simulate propagating a ray in one or more directions (or outward in all directions). By tracing the ray(s) through neighboring pixels until they encounter a fault, the extent of the continuous zone in which the starting point is located can be mapped. The subsurface modeling system 120 may proceed in this way with other starting points and may define additional continuous zones until all pixels of the image are identified as pertaining to a continuous zone or a fault. Accordingly, the subsurface modeling system 120 generates a continuous zone map 543 that indicates the shape, positioning, and extent of each of the continuous zones in the image. The continuous zone maps 543 may be an image or mask with the same dimensions as the fault data 540 and/or the sparse geological feature data and having the continuous zones labeled by integer values to indicate the various zones. As described herein, the continuous zone maps 543 may be utilized to facilitate generating various kernel masks that mask, for a given continuous zone, faults and other continuous zones.

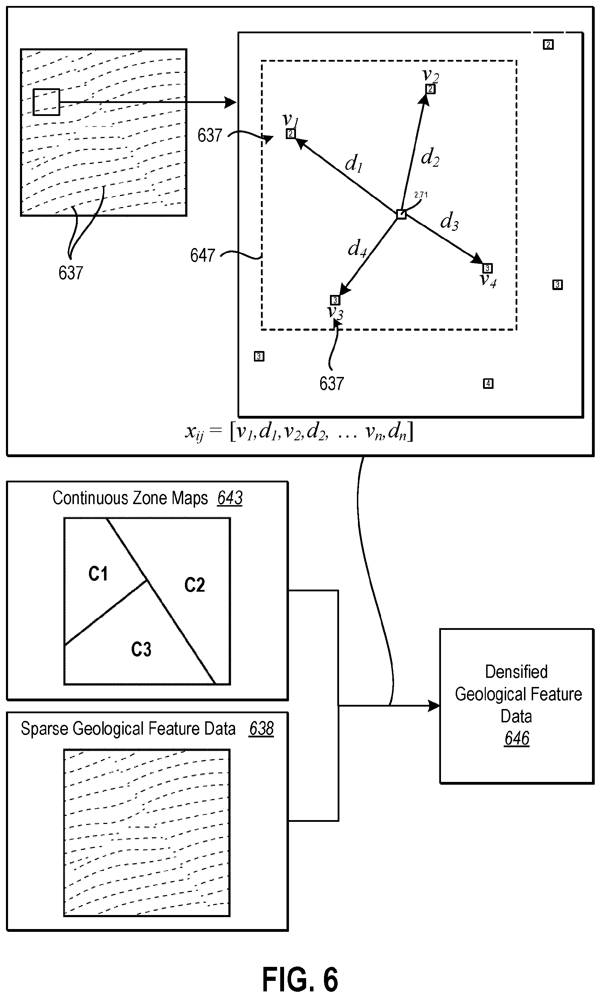

In some cases, the continuous zone maps 543 may be utilized for generating geological feature data that is more densely populated with geological layer identification. **FIG. 6** illustrates an example of generating densified geological feature data 646 based on sparse geological feature data 638 and continuous zone maps 643. The sparse geological feature data 638 may be the sparse geological feature data 338 as described in connection with **FIG. 3,** and the continuous zone maps 643 may be the continuous zone maps 543 as described in connection with FIG. 5. In some cases, the densified geological feature data is generated by the geological data densifier 126 of the subsurface modeling system 120.

As discussed above, the sparse geological feature data 638 includes horizon picks 637 that sparsely represent known (e.g., interpreted) locations where a geological boundary is present, but most pixels remain empty (or labeled as 0). To densify this data, the subsurface modeling system 120 may evaluate each empty pixel and may derive a value based on interpolating and/or referencing neighboring horizon picks 637.

In some cases, the subsurface modeling system 120 considers an evaluation zone 647, or set of pixels that are within a threshold boundary and/or distance from a target pixel $X_{i,j}$. For instance, the subsurface modeling system 120 may evaluate the pixels in a grid or other pattern about the target pixel $X_{i,j}$. As an example, a 10x10 grid may be utilized for considering the 99 pixels about the target pixel $X_{i,j}$. The subsurface modeling system 120 may utilize any other sized and/or shape of grid for considering any quantity n of neighboring pixels about the target pixel $X_{i,j}$. Accordingly, the subsurface modeling system 120 may determine a value for the target pixel $X_{i,j}$ based on the value, v, of non-zero pixels of the horizon picks 637 that fall within the evaluation zone 647. Additionally, the subsurface modeling system 120 may determine and incorporate a distance, d, of each pixel into the calculation. For instance, incorporating the distances, d, in this way may reflect the fact that closer neighbors have more influence and accordingly represent geological features that are more relevant than distant ones.

Based on the values, v, of the identified horizon picks 637, and their associated distances, d, the subsurface modeling system 120 determines and assigns a value for the target pixel $X_{i,j}$. For instance, in some cases, the subsurface modeling system 120 determines a weighted average of value of the horizon picks and their relative distances from the target pixel $X_{i,j}$. In other cases, other functions (e.g., interpolations) of the value of horizon picks 637 and their associated distance may be utilized, such as inverse distance weighting, radial basis functions, or other interpolation techniques. The subsurface modeling system 120 proceeds in this manner to populate each of the empty pixels of the sparse geological feature data 638 and thereby generate the densified geological feature data 646. In this way, the densified geological feature data 646 may represent the subsurface horizon structure with smoother transitions and more continuous representations.

In some cases, the subsurface modeling system 120 may not necessarily implement the evaluation zone 637 as a fixed or set size and/or shape of neighboring pixels about the target pixel $X_{i,j}$, but rather, the subsurface modeling system 120 may instead consider the n nearest horizon picks 637 to the target pixel $X_{i,j}$, for instance, regardless of their distance from the target pixel $X_{i,j}$, and may also weight these horizon picks 637 based on their associated distance. For instance, the subsurface modeling system 120 may evaluate the closest 5, 10, 20, 30, 40, 50 or other number of closest horizon picks 637 (and their associated distances) in order to determine a value for the target pixel $X_{i,j}$.

In some cases, the subsurface modeling system 120 only utilizes horizon picks 637 within a same continuous zone for determining the value for the target pixel $X_{i,j}$. For instance, based on the continuous zone maps 643, the subsurface modeling system 120 may implement the evaluation zone 647 (or n closest horizon picks 637) but may ignore any horizon picks 637 that are not within the same continuous zone as the target pixel $X_{i,j}$. In this way, the densifying of the geological feature data may maintain the integrity of the continuous zones and may not be affected by the horizon discontinuities across fault lines. The subsurface modeling system 120 may utilize padding techniques at the edges of the image in order to account for small continuous zones and/or to apply the evaluation zone 647 for target pixels at the edges of the image.

In this way, the densified geological feature data 646 may provide a more informative and spatially coherent representation of the subsurface than the sparse geological feature data 638, but may do so based on the sparse horizon picks 637. Accordingly, a denser representation may be obtained but without requiring a more labor-intensive and/or computationally expensive process of making dense horizon picks. As described in more detail below, the densified geological feature data 646 may be utilized as input for a ML model, which may be beneficial for facilitating the model to better learn spatial patterns and horizon continuity than the sparse geological feature data 638. For instance, the densified geological feature data 646 may provide an enhanced representation of subtle structures that may be difficult for ML models to learn from sparse, isolated horizon picks alone. Further, the densified geological feature data 646 may enable a ML model to generalize better, especially in areas where horizon picks are limited and/or unevenly distributed, leading to more accurate and geologically plausible outputs.

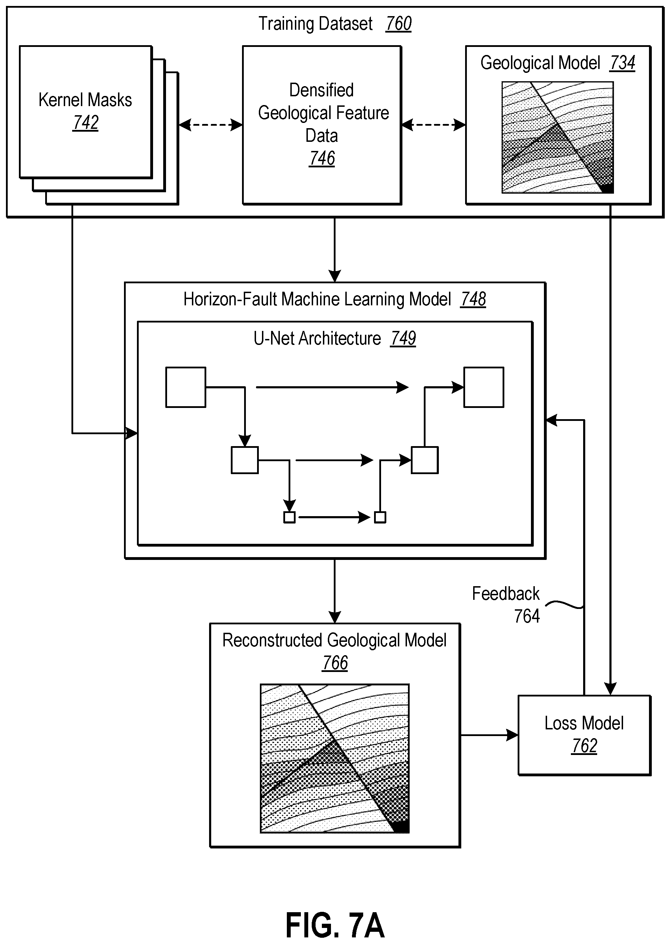

The densified geological feature data 646 as generated based on the existing geological models may be implemented as training data for training one or more horizon-fault ML models of the subsurface modeling system 120. Accordingly, **FIG. 7A** illustrates a block diagram example of training a horizon-fault machine learning model 748. The horizon-fault ML model 748 may be generated and/or applied by the subsurface modeling system 120.

The horizon-fault ML model 748 may be generated to create geological models from densified geological feature data 746 as input data. In other words, the horizon-fault ML model 748 may be trained to create geological models or horizon maps that classify subsurface layers and indicate horizons therebetween based on densified data from sparse horizon picks. For example, as shown, **FIG. 7A** includes a training dataset 760, the horizon-fault ML model 748, and a loss model 762. The training dataset 760 includes the densified geological feature data 746 as well as a corresponding geological model 734 upon which the generation of the densified geological feature data 746 was based. Further, the training dataset 760 includes kernel masks 742 which correspond with the densified geological feature data 746. The inclusion of the kernel masks 742 in the training dataset 760 may be representative of providing the kernel masks 742 to the horizon-fault ML model 748 as an input, or otherwise utilizing the kernel masks 742 in connection with the convolution and/or pooling processes of the U-net architecture 749. The densified geological feature data 746, geological model 734, and kernel masks 742 may correspond to similarly-named data as described above.

In various implementations, such as the one shown in **FIG. 7A,** the horizon-fault ML model 748 includes a neural network architecture composed of encoder and decoder neural network layers. In some implementations, the horizon-fault ML model 748 is implemented via a U-Net neural network such as a U-net architecture 749. The horizon-fault ML model 748 may be implemented via other types of ML models or architectures, such as a U-Net++ variant, or another type of convolutional neural network (CNN) suited for semantic segmentation or structured prediction tasks. In alternative implementations, the horizon-fault ML model 748 may include additional architectural elements such as Monte Carlo Dropout, attention mechanisms, or masked convolutions. In at least one embodiment, the model is applied to generate a complete, dense geological model or layer map from an input dataset consisting of densified horizon data and derived from sparse geologic interpretations.

To elaborate, in some instances, the horizon-fault ML model 748 is a U-Net-based CNN that includes lower neural network layers forming an encoder and higher neural network layers forming a decoder. The encoder processes the input image-representing geological features densified from sparse horizon picks-through a series of convolutional and pooling layers. These layers reduce the spatial resolution of the input while extracting multi-scale semantic features, such as horizon trends, formation boundaries, and fault-adjacent discontinuities. The encoder transforms the input into a latent feature representation encoding local and global geological context.

Additionally, in various implementations, the decoder of the horizon-fault ML model 748 reconstructs the original spatial dimensions by applying upsampling layers such as transposed convolutions, and by integrating corresponding high-resolution features from the encoder through skip connections. These skip connections help preserve spatial accuracy and geological continuity, particularly in regions near faults or within rapidly changing stratigraphy. In some instances, decoder layers also include classifier functions (e.g., SoftMax) to assign each pixel (or voxel) in the output to a discrete stratigraphic label. The output of the model is a fully populated geological model that delineates subsurface layers or formations at each pixel of the input domain.

In various examples, the kernel masks 742 are utilized (e.g., applied) to one or more of the convolutional processes and/or pooling processes in order to isolate continuous zones as described herein. For instance, the kernel masks 742 may be input to the horizon-fault ML model 748 for application therein, or may be applied by another component of the subsurface modeling system 120. In some cases, the kernel masks 742 are generated dynamically during the operation of the horizon-fault ML model 748, such as in connection with each stride or step of the kernel through the input image.

As shown, the horizon-fault ML model 748 generates a reconstructed geological model 766. The reconstructed geological model 766 may be a representation of the subsurface geology indicated in the densified geological feature data 746, with specific layers and horizons labeled and indicated in detail.

In various implementations, the horizon-fault ML model is trained using the geological model 734, with loss functions such as categorical cross-entropy, Dice loss, or boundary-aware losses applied to evaluate prediction accuracy against ground truth. For instance, the subsurface modeling system 120 may use the loss model 762 to compute the error between predicted layer assignments of the reconstructed geological model 766 and ground truth model labels of the geological model 734, and to produce feedback data 764 used for model optimization.

In some instances, the feedback data 764 is used to train and fine-tune the neural network layers of the horizon-fault ML model 748 through backpropagation and other end-to-end learning techniques. Optimizer algorithms such as Adam or stochastic gradient descent (SGD) may be used to minimize the loss function over the training dataset. The model may be iteratively trained until convergence criteria are met, such as a predefined number of epochs, exhaustion of training data, or a target level of prediction accuracy.

In various implementations, the subsurface modeling system 120 employs data augmentation techniques to improve model robustness and generalization. For instance, the training dataset 760 may be augmented by horizontally or vertically flipping the input data, adding Gaussian noise, shifting layer boundaries, or applying elastic transformations. These techniques increase dataset diversity and help the model generalize to variations in subsurface geometry across different geologic settings.

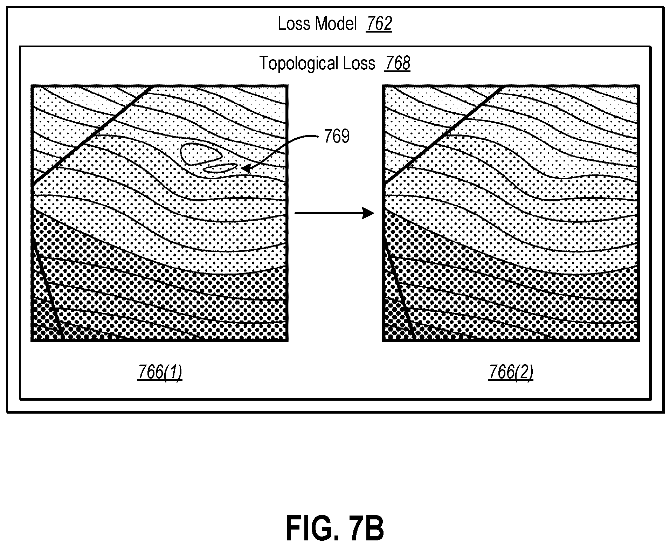

**FIG. 7B** illustrates a block diagram example of the loss model 762 incorporating a topological loss 768 for training the horizon-fault ML model 748. In particular, **FIG. 7B** illustrates a first reconstructed geological model 766(1) which exhibits a closed-loop geological layer, or bubble 769 that is stratigraphically invalid. Based on the topological loss techniques described in detail below, the loss model 762 facilitates the horizon-fault ML model 748 generating geological models, such as a second reconstructed geological model 766(2) that do not include geologically invalid results, such as closed-loop stratigraphy.

In various implementations, the loss model 762 integrates both standard reconstruction losses (e.g., mean squared error, cross-entropy loss) and one or more topological losses 768. The topological loss 768 is designed to penalize predictions from the horizon-fault ML model 748 that exhibit topological artifacts inconsistent with plausible geological structure, such as the bubble 769. To elaborate, the topological loss suppresses undesired closed-loop structures or isolated features that are not geologically valid, such as completely enclosed formations that fail to connect laterally to surrounding layers. The topological loss 768 may operate alongside the primary reconstruction loss to guide the learning process toward outputs that are not only numerically accurate, but also topologically consistent with geological domain expectations.

In at least one implementation, the topological loss 768 is implemented using Morse theory. In these implementations, the scalar output of the horizon-fault ML model 748 is treated as a continuous field, and Morse functions are used to analyze the topological skeleton of this field. Specifically, the subsurface modeling system 120 utilizes Morse theory to identify critical points such as local minima, maxima, and saddle points within the predicted scalar field, and traces integral lines between these critical points. These integral lines form a topological skeleton that encodes the fundamental structure of the predicted data, including the shape and connectivity of geological boundaries. By identifying and focusing on these critical features, the loss model 762 may apply targeted penalties to regions (e.g., closed-loop regions) that deviate from expected structural patterns.

For example, in cases where the horizon-fault ML model 748 produces closed-loop contours or spurious isolated pockets in the predicted data, the subsurface modeling system 120 leverages this Morse-based analysis to detect the presence of unnecessary maxima or minima that give rise to such formations. Through the structure of the Morse complex, the topological loss 768 identifies key regions where openings should be introduced, such as along integral lines terminating in saddle points, to break loops and reconnect layers with the surrounding stratigraphy. By applying localized loss terms that encourage such openings, the loss model 762 can train the horizon-fault ML model 748 to avoid the formation of topologically invalid features and instead generate geologic structures that are laterally continuous, properly bounded, and consistent with expected depositional patterns.

During training, the subsurface modeling system 120 uses these Morse-derived topological features to implement the topological loss 768 by defining weighted loss functions that dynamically adapt to the evolving predictions of the horizon-fault ML model 748. In this way, the loss model 762 emphasizes topologically critical regions during backpropagation, enabling the horizon-fault ML model to efficiently correct structural errors (e.g., closed-loop horizons) and converge more rapidly on valid geologic forms. Leveraging the incorporation of Morse theory into the loss computation in this way may significantly improve the fidelity of the reconstructed geological model 766 in terms of both pixel-wise or point-wise accuracy as well as in capturing the underlying geometry and topology of the target formations.

In some cases, the topological loss 768 may be implemented based on incorporating persistent homology techniques to improve the geological plausibility of the generated geological models. For instance, the subsurface modeling system may analyze the evolution of topological features, such as connected components, holes, etc., within a scalar field derived from intermediate predictions of the horizon-fault ML model 748. By applying a filtration process to the scalar field (e.g., increasing a threshold value $\varepsilon$ across a function $\mu(x)$), the loss model observes when new features emerge or disappear in the resulting segmentation masks. This filtration process allows for the construction of a persistence diagram, which encodes the birth and death of these topological features across scales. Features with long persistence may be considered topologically significant and may be used to assess how well the geological model output maintains meaningful geological structures. Through leveraging persistent homology in this way, the loss model 762 may penalize discrepancies between the persistence diagrams of the predicted and reference data, thereby guiding the training process to reduce spurious loops, disconnected components, or geologically implausible formations in the geological model output.

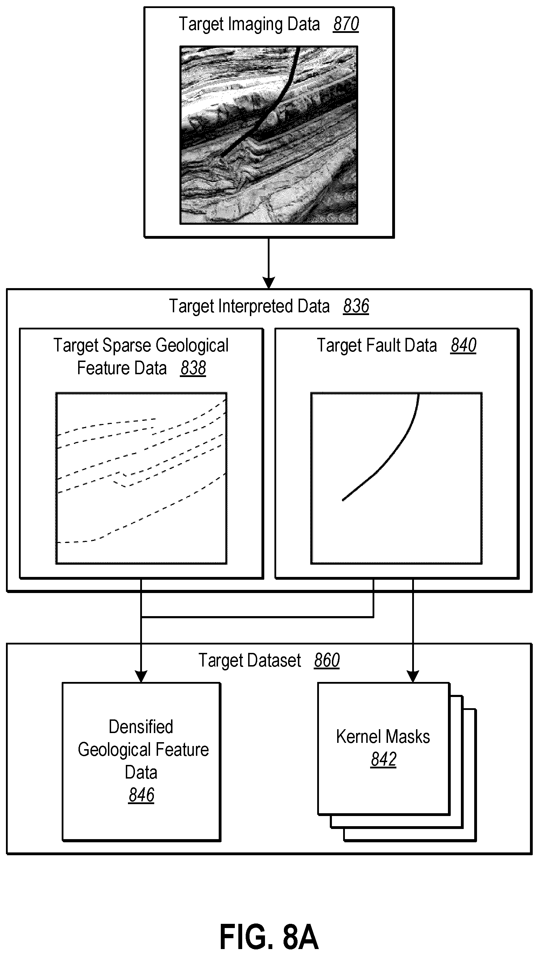

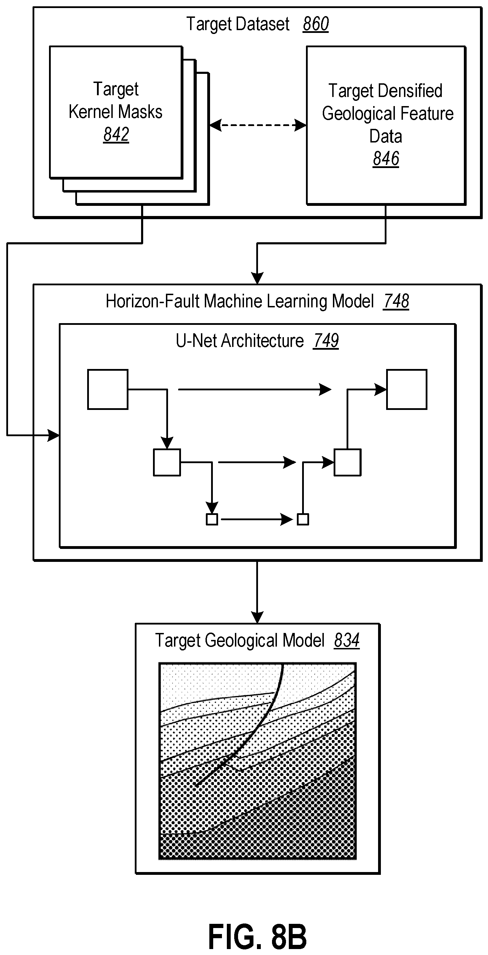

Once trained, in various implementations, the subsurface modeling system 120 uses the horizon-fault ML model 748 to automatically generate full-resolution geological layer models from input data consisting of densified horizon interpretations, and by relying on kernel masks 742 for indicating faults and isolation continuous zones. **FIGS. 8A** and **8B** illustrate an example workflow of using target imaging data 870 to generate a target geological model 834 using the horizon-fault ML model 748, according to at least one embodiment of the present disclosure. In these figures, the horizon-fault ML model 748 represents a trained version of the horizon-fault ML model 748 with tuned neural network layers and other trained components.

As shown in **FIG. 8A,** the subsurface modeling system 120 utilizes target imaging data 870 to generate a target dataset 860. For instance, the target imaging data 870 may be representative of field-acquired subsurface measurements from a region of interest. Unlike the labeled geological models used during training, this target imaging data 870 may not be a geological model with labeled layers and/or horizons, but may be subsurface image samples such as resistivity logs, acoustic reflectivity data, seismic slices, or other geophysical inputs that characterize the subsurface without providing direct geological interpretation. The imaging data 870 may serve as the raw and/or target data of interest from which geological layers and horizons will be inferred using the horizon-fault ML model 748.

From the target imaging data 870, the subsurface modeling system 120 generates a set of target interpreted data 836, which includes target sparse geological feature data 838 and target fault data 840. As described above, these interpreted data may be manually defined, semi-automatically extracted, and/or algorithmically derived, and are intended to provide minimal but geologically meaningful constraints for the target region. For instance, the target sparse geological feature data 838 includes sparse horizon picks 837 which delineate various points along known (or interpreted) layer horizons, and the target fault data 840 is expressed as a map or mask detailing the extent of one of more faults in the target imaging data 870.

Based on the target sparse geological feature data 838 and the target fault data 840, the subsurface modeling system 120 constructs a target dataset 860 for use with the horizon-fault ML model 748. The target dataset 860 includes target densified geological feature data 846 produced through the same densification techniques described above and based on the target sparse geological feature data 838. The target dataset 860 also includes target kernel masks 842 based on the target fault data 840 for isolation continuous zones. In some cases, the subsurface modeling system 120 determines a continuous zone map as described herein based on the target fault data 840 and to facilitate generating the target densified geological feature data 846 and/or the target kernel masks 842.

As shown in **FIG. 8B,** the trained horizon-fault ML model 748 generates a target geological model 834 from the target densified geological feature data 846. For instance, the target geological model 834 may indicated, via various labels, colors, values, or other indications, the geological layers and horizons therebetween for the subsurface geology that the target imaging data 870 captures. In this way, the subsurface modeling system 120 facilitates generating input data for the horizon-fault ML model 748 having a rich representation of underground features, but based on only sparse interpretation of downhole imaging data, and in particular, can do so accurately notwithstanding complex geological structures includes faults and/or discontinuities.

In various implementations, the target geological model 834 output from the horizon-fault ML model 748 may be used to support a range of subsurface interpretation and operational tasks. For example, the target geological model 834 may simulate or identify downhole geological features such as stratigraphic layers, structural boundaries, or fault zones. These features may be automatically extracted (by the subsurface modeling system 120 or other system) from the target geological model 834 model and analyzed to determine formation transitions, layer continuity, or the presence of geologic discontinuities. In some cases, this allows for more accurate determination of reservoir extents, well placement strategies, or subsurface hazard avoidance. Because the target geological model 834 is based on a high-resolution, topologically constrained representation of the subsurface, the features detected within the target geological model 834 are more geologically plausible and interpretable compared to features derived from conventional data processing techniques or raw imaging data alone.

Additionally, the target geological model 834 may be used to inform or control the operation of downhole tools during drilling or production. For instance, by providing a predicted view of subsurface structure ahead of the bit, the model can be used to guide gesturing operations, including adjusting tool or drilling parameters in real time based on anticipated formation changes. For instance, the horizon-fault ML model 748 may be utilized in real time to generate the target geological model 834 as the target imaging data 870 is received (e.g., in real time). The target geological model 834 may also be used in automated workflows to trigger certain actions when approaching geologic boundaries, such as changing drilling direction, activating logging tools, initiating sampling routines, or other actions. In other scenarios, the target geological model 834 may support post-acquisition analysis or simulation-based planning for enhanced oil recovery (EOR), completions design, or reservoir modeling. Accordingly, in addition to the target geological model 834 serving as a data output, the target geological model 834 may also enable concrete actions and control strategies that improve downhole operations and subsurface decision-making.

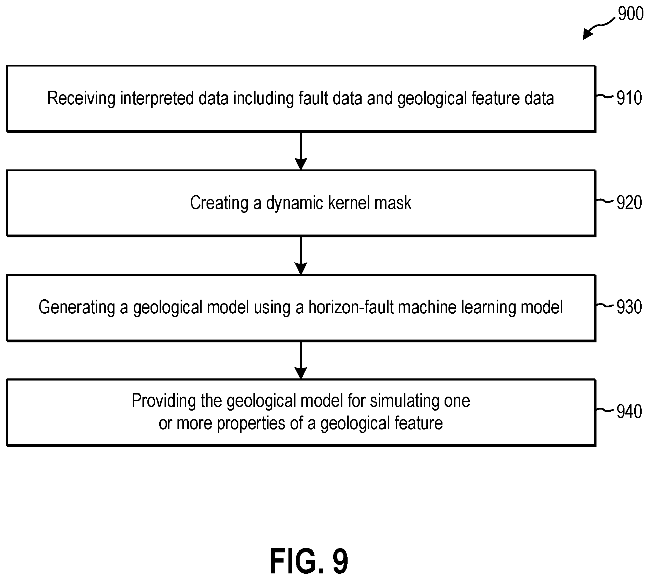

**FIG. 9** illustrates a flow diagram for a method 900 or a series of acts for modeling subsurface geology, according to at least one embodiment of the present disclosure. While **FIG. 9** illustrates acts according to one embodiment, alternative embodiments may add to, omit, reorder, or modify any of the acts of **FIG. 9**. In some embodiments, the acts of **FIG. 9** are performed as part of a method. In some embodiments, the acts of **FIG. 9** are performed by a computer system. in some embodiments, the acts of **FIG. 9** are performed as instruction stored on a computer-readable storage medium.

In some embodiments, the method 900 includes an act 910 of receiving interpreted data including fault data and geological feature data. For example, the act 910 may include receiving interpreted data including fault data indicating at least one fault within the interpreted data and geological feature data including a plurality of horizon picks indicating a subsurface geological feature.

In some embodiments, the method 900 includes an act 920 of creating a dynamic kernel mask. For example, the act 920 may include, based on the fault data, creating a dynamic kernel mask.

In some embodiments, the method 900 includes an act 930 of generating a geological model using a horizon-fault machine learning model. For example, the act 930 may include generating a geological model using a horizon-fault machine learning model that is generated to process input geological feature data to predict continuous geological features across subsurface discontinuities based on applying the dynamic kernel mask to isolate continuous zones in the input geological feature data.

In some embodiments, the method 900 includes an act 940 of providing the geological model for simulating one or more properties of a geological feature. For example, the act 940 may include providing the geological model for simulating one or more properties of a geological feature indicated in the geological feature data.

In some embodiments, the geological feature data of the interpreted data is sparse geological feature data, and the input geological feature data is densified geological feature data generated based on interpolating the plurality of horizon picks to populate the densified geological feature data.

In some embodiments, the horizon-fault machine learning model is a convolutional neural network (CNN) having a U-Net architecture. In some embodiments, the U-net architecture has 3 levels. In some embodiments, the U-net architecture has 5 levels.

In some embodiments, based on the dynamic kernel mask, the horizon-fault machine learning model implements no more than 1 million parameters. In some embodiments, the horizon-fault machine learning model is generated to apply the dynamic kernel mask at each convolution layer. In some embodiments, the horizon-fault machine learning model is generated to apply the dynamic kernel mask at each pooling layer.

In some embodiments, the interpreted data includes source data of one or more of borehole images, seismic data, or contextual data. In some embodiments, the geological feature is a horizon between two geological layers.

In some embodiments, the plurality of horizon picks are positioned no more than once per meter. in some embodiments, the plurality of horizon picks includes a first set of horizon picks indicating a first subsurface geological feature and a second set of horizon picks indicating a second subsurface geological feature.

In some embodiments, the fault data indicates a discontinuity in the geological feature. In some embodiments, the fault data defines at least two continuous zones positioned on either side of the discontinuity. In some embodiments, the at least two continuous zones are identified in the fault data based on a ray tracing method. In some embodiments, the first subsurface geological feature is a first horizon of a first geological layer, and the second subsurface geological feature is a second horizon of a second geological layer.

In some embodiments, the dynamic kernel mask is a binary mask for isolating data points of a same continuous zone. In some embodiments, the dynamic kernel mask prevents calculations from being performed based on numerical values from non-continuous zones. In some embodiments, the dynamic kernel mask includes a plurality of kernel masks applicable for each of a plurality of positions of a kernel applied to the input geological feature data.

In some embodiments, the interpreted data includes source data of one or more of borehole images, seismic data, or contextual data. In some embodiments, the interpreted data is generated based on manual interpretation of the source data to identify the fault data and the geological feature data. In some embodiments, the fault data is identified based on identifying an outcrop in the source data. In some embodiments, the geological feature is a horizon between two geological layers.

In some embodiments, the plurality of horizon picks of the geological feature data are sparse. For example, the plurality of horizon picks may be positioned no more than once per meter. In another example, horizon picks indicating a geological feature (e.g., a horizon or layer) may be sparse in that less than 100% of the geological feature is demarked by the horizon picks. For example, between 20% and 100% of the geological feature may be indicated by the horizon picks. In another example, less than 20% of the geological feature is indicated by the horizon picks. In some embodiments, the interpreted data may be sparse. For example, only 10% or less of the interpreted data (e.g., an image) may include a measurement or value. For instance, about 10% or less of the interpreted data (e.g., image) may include measurement values, and the remaining portion of the interpreted data may include empty cells, pixels, voxels, or other empty data points.

In some embodiments, the fault data indicates a discontinuity in the geological feature. In some embodiments, the interpreted data is 2-dimensional image data. In some embodiments, interpreted data is 3-dimensional image data. In some embodiments, the fault data is represented as a fault image. In some embodiments, the fault image defines at least two continuous zones positioned on either side of the at least one fault. In some embodiments, the fault image identifies pixels from a same continuous zone with a same integer value. In some embodiments, the at least two continuous zones are identified in the fault image based on a ray tracing method. In some embodiments, pixels of the fault image that are adjacent to and on opposite sides of the at least one fault are identified by different integer values. In some embodiments, the plurality of horizon picks includes a first set of horizon picks indicating a first subsurface geological feature and a second set of horizon picks indicating a second subsurface geological feature.

In some embodiments, the geological model is a geophysical model indicating properties of an underground formation. In some embodiments, the geological model indicates layers one or more layers of the underground formation. In some embodiments, the geological model is 3-dimensional. In some embodiments, the first subsurface geological feature is a first horizon of a first geological layer, and wherein the second subsurface geological feature is a second horizon of a second geological layer.

In some embodiments, the horizon-fault machine learning model is generated to apply a dynamic kernel to process the input geological feature data. In some embodiments, a dimensionality of the dynamic kernel changes one or more times as the horizon-fault machine learning model sequentially applies the dynamic kernel to data points of the input geological feature data. In some embodiments, the masking by the dynamic kernel changes one or more times during convolutional layers of the horizon-fault machine learning model. In some embodiments, the masking by the dynamic kernel changes one or more times during pooling layers of the horizon-fault machine learning model.

In some embodiments, the geological feature data is densified based on the locations of the n closest data points having numerical values in a same continuous zone. In some embodiments, n is an integer number no less than 50. In some embodiments, for a given data point, if the number of closest data points having numerical values in the same continuous zone is less than n, padding is implemented so that inputs for the given data point are of a threshold size or dimensionality.

In some embodiments, based on the dynamic kernel, the horizon-fault machine learning model implements no more than 1 million parameters. In some embodiments, based on the dynamic kernel, the horizon-fault machine learning model implements about 10,000 parameters. In some embodiments, the horizon-fault machine learning model is generated to apply the dynamic kernel mask at one or more neural network layers. In some embodiments, the horizon-fault machine learning model is generated to apply the dynamic kernel mask at each convolution layer. In some embodiments, the horizon-fault machine learning model is generated to apply the dynamic kernel mask at each pooling layer. In some embodiments, the dynamic kernel mask is determined based on the following formula:

$$W_{masked} = W \circ M$$

$$X_{out} = \frac{K^2}{\sum M}(W_{masked}X_{kernel} + b)$$

where $W$, $W_{masked}$ are the unmasked and masked weights of the kernel. M is the binary mask. $K$ is the size of kernel. $X_{kernel}$ is the input value of the kernel. b is the bias. In some embodiments, the dynamic kernel mask is generated and applied for a forward calculation of each data point in the input geological feature data. In some embodiments, the dynamic kernel mask is unique for at least some data points in the input geological feature data. In some embodiments, the dynamic kernel mask is a binary mask for isolating data points of a same continuous zone. In some embodiments, the dynamic kernel mask prevents calculations from being performed based on numerical values from non-continuous zones. In some embodiments, the dynamic kernel mask is defined as:

$$M_{ij} = \begin{cases} 1, & if\ the\ pixel\ is\ in\ the\ same\ continuous\ zone\ as\ the\ central\ pixel \\ 0, & if\ the\ pixel\ is\ not\ in\ the\ same\ continuous\ zone\ as\ the\ central\ pixel. \end{cases}$$

In some embodiments the dynamic kernel mask is a weighted mask for weighting together numerical values of a same continuous zone.

In some embodiments, the method further includes generating a plot, graph, or other visual representation of the geological model. In some embodiments, the method further includes presenting the geological model via a graphical user interface of a client device. In some embodiments, the method further includes providing the geological model for simulating fluid flow of a formation. In some embodiments, the method further includes providing the geological model for creating or adjusting a drilling plan for a wellbore. In some embodiments, the method further includes providing the geological model for creating or adjusting a trajectory of a wellbore. In some embodiments, the method further includes providing the geological model for adjusting one or more drilling parameters of a downhole tool for forming a wellbore.

In some embodiments, the horizon interpolation machine learning model is generated based on a loss model configured to prevent geologically irrational results in the interpolated continuous geological features. In some embodiments, the geologically irrational results include one or more closed-shape horizons. In some embodiments, the loss model is a topological loss model.

In some embodiments, topological loss model implements persistent homology and/or a persistence diagram. In some embodiments, the persistent homology is computed through filtration. In some embodiments, a homology is computed based on a scalar function $\mu(x)$ and a threshold $\varepsilon$; a segmentation mask is generated based on extracting data points x, where $\mu(x) \leq \varepsilon$; as $\varepsilon$ increases, one or more features is observed including one or more of: one or more horizon lines being connected; one or more closed-shape horizons being disconnected; or one or more closed-shape horizons being filled in; and based on a persistence diagram of the one or more features, the topological loss model indicates one or more topological errors for backpropagating to train the horizon interpolation machine learning model.

In some embodiments, the topological loss model implements Morse theory and/or field reconstruction. In some embodiments, the topological loss model represents the continuous geological features as a scalar field and identifies one or more closed-shape horizons based on identifying one or more critical points in the scalar field. In some embodiments, the one or more critical points includes one or more local maxima, local minimum, or saddle points. In some embodiments, the topological loss model weights the one or more closed-shape horizons for backpropagating to train the horizon interpolation machine learning model for preventing the geologically irrational results in the continuous geological features.

In some embodiments, the continuous geological features are one or more layers of a formation. In some embodiments, at least one layer of the one or more layers of the formation has a non-uniform width. In some embodiments, the geological model is 2-dimensional and the horizon interpolation machine learning model is generated to interpolate the continuous geological features in 2-dimensional space. In some embodiments, the geological model is 3-dimensional and the horizon interpolation machine learning model is generated to interpolate the continuous geological features in 3-dimensional space.

Turning now to **FIG. 10,** this figure illustrates certain components that may be included within a computer system 1000. One or more computer systems 1000 may be used to implement the various devices, components, and systems described herein.

The computer system 1000 includes a processor 1001. The processor 1001 may be a general-purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 1001 may be referred to as a central processing unit (CPU). Although just a single processor 1001 is shown in the computer system 1000 of **FIG. 10,** in an alternative configuration, a combination of processors (e.g., an ARM and DSP) could be used.

The computer system 1000 also includes memory 1003 in electronic communication with the processor 1001. The memory 1003 may include computer-readable storage media and can be any available media that can be accessed by a general purpose or special purpose computer system. Computer-readable media that store computer-executable instructions are non-transitory computer-readable media (device). Computer-readable media that carry computer-executable instructions are transmission media. Thus, by way of example and not limitations, embodiment of the present disclosure can comprise at least two distinctly different kinds of computer-readable media: non-transitory computer-readable media (devices) and transmission media.

Both non-transitory computer-readable media (devices) and transmission media may be used temporarily to store or carry software instructions in the form of computer readable program code that allows performance of embodiments of the present disclosure. Non-transitory computer-readable media may further be used to persistently or permanently store such software instructions. Examples of non-transitory computer-readable storage media include physical memory (e.g., RAM, ROM, EPROM, EEPROM, etc.), optical disk storage (e.g., CD, DVD, HDDVD, Blu-ray, etc.), storage devices (e.g., magnetic disk storage, tape storage, diskette, etc.), flash or other solid-state storage or memory, or any other non-transmission medium which can be used to store program code in the form of computer-executable instructions or data structures and which can be accessed by a general purpose or special purpose computer, whether such program code is stored or in software, hardware, firmware, or combinations thereof.

Instructions 1005 and data 1007 may be stored in the memory 1003. The instructions 1005 may be executable by the processor 1001 to implement some or all of the functionality disclosed herein. Executing the instructions 1005 may involve the use of the data 1007 that is stored in the memory 1003. Any of the various examples of modules and components described herein may be implemented, partially or wholly, as instructions 1005 stored in memory 1003 and executed by the processor 1001. Any of the various examples of data described herein may be among the data 1007 that is stored in memory 1003 and used during execution of the instructions 1005 by the processor 1001.

A computer system 1000 may also include one or more communication interfaces 1009 for communicating with other electronic devices. The communication interface(s) 1009 may be based on wired communication technology, wireless communication technology, or both. Some examples of communication interfaces 1009 include a Universal Serial Bus (USB), an Ethernet adapter, a wireless adapter that operates in accordance with an Institute of Electrical and Electronics Engineers (IEEE) 802.11 wireless communication protocol, a Bluetooth® wireless communication adapter, and an infrared (IR) communication port.

The communication interfaces 1009 may connect the computer system 1000 to a network. A "network" or "communications network" may generally be defined as one or more data links that enable the transport of electronic data between computer systems and/or modules, engines, or other electronic devices, or combinations thereof. When information is transferred or provided over a communication network or another communications connection (either hardwired, wireless, or a combination of hardwired or wireless) to a computing device, the computing device properly views the connection as a transmission medium. Transmission media can include a communication network and/or data links, carrier waves, wireless signals, and the like, which can be used to carry desired program or template code means or instructions in the form of computer-executable instruction or data structures and which can be accessed by a general purpose or special purpose computer.

A computer system 1000 may also include one or more input devices 1011 and one or more output devices 1013. Some examples of input devices 1011 include a keyboard, mouse, microphone, remote control device, button, joystick, trackball, touchpad, and lightpen. Some examples of output devices 1013 include a speaker and a printer. One specific type of output device that is typically included in a computer system 1000 is a display device 1015. Display devices 1015 used with embodiments disclosed herein may utilize any suitable image projection technology, such as liquid crystal display (LCD), light-emitting diode (LED), gas plasma, electroluminescence, or the like. A display controller 1017 may also be provided, for converting data 1007 stored in the memory 1003 into one or more of text, graphics, or moving images (as appropriate) shown on the display device 1015.

The various components of the computer system 1000 may be coupled together by one or more buses, which may include one or more of a power bus, a control signal bus, a status signal bus, a data bus, other similar components, or combinations thereof. For the sake of clarity, the various buses are illustrated in **FIG. 10** as a bus system 1019.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

Further, upon reaching various computer system components, program code in the form of computer-executable instructions or data structures can be transferred automatically or manually from transmission media to non-transitory computer-readable storage media (or vice versa). For example, computer executable instructions or data structures received over a network or data link can be buffered in memory (e.g., RAM) within a network interface module (NIC), and then eventually transferred to computer system RAM and/or to less volatile non-transitory computer-readable storage media at a computer system. Thus, it should be understood that non-transitory computer-readable storage media can be included in computer system components that also (or even primarily) utilize transmission media.

## INDUSTRIAL APPLICABILITY

The following description from [0126]-[0194] includes various embodiments that, where feasible, may be combined in any permutation. For example, the embodiment of [0126] may be combined with any or all embodiments of the following paragraphs. Embodiments that describe acts of a method may be combined with embodiments that describe, for example, systems and/or devices. Any permutation of the following paragraphs is considered to be hereby disclosed for the purposes of providing "unambiguously derivable support" for any claim amendment based on the following paragraphs. Furthermore, the following paragraphs provide support such that any combination of the following paragraphs would not create an "intermediate generalization."

In some embodiments, a method of modeling subsurface geology includes receiving interpreted data including fault data indicating at least one fault within the interpreted data and geological feature data including a plurality of horizon picks indicating a subsurface geological feature; based on the fault data, creating a dynamic kernel mask; generating a geological model using a horizon-fault machine learning model that is generated to process input geological feature data to interpolate continuous geological features across subsurface discontinuities based on applying the dynamic kernel mask to isolate continuous zones in the input geological feature data; and providing the geological model for simulating one or more properties of a geological feature indicated in the geological feature data.

In some embodiments, the geological feature data of the interpreted data is sparse geological feature data, and the input geological feature data is densified geological feature data generated based on interpolating the plurality of horizon picks to populate the densified geological feature data.

In some embodiments, the horizon-fault machine learning model is a convolutional neural network (CNN) having a U-Net architecture.

In some embodiments, the U-net architecture has 3 levels.

In some embodiments, the U-net architecture has 5 levels.

In some embodiments, based on the dynamic kernel mask, the horizon-fault machine learning model implements no more than 1 million parameters.

In some embodiments, the horizon-fault machine learning model is generated to apply the dynamic kernel mask at each convolution layer.

In some embodiments, the horizon-fault machine learning model is generated to apply the dynamic kernel mask at each pooling layer.

In some embodiments, the interpreted data includes source data of one or more of borehole images, seismic data, or contextual data.

In some embodiments, the geological feature is a horizon between two geological layers.

In some embodiments, the plurality of horizon picks are positioned no more than once per meter.

In some embodiments, the plurality of horizon picks includes a first set of horizon picks indicating a first subsurface geological feature and a second set of horizon picks indicating a second subsurface geological feature.

In some embodiments, the fault data indicates a discontinuity in the geological feature.

In some embodiments, the fault data defines at least two continuous zones positioned on either side of the discontinuity.

In some embodiments, the at least two continuous zones are identified in the fault data based on a ray tracing method.

In some embodiments, the first subsurface geological feature is a first horizon of a first geological layer, and the second subsurface geological feature is a second horizon of a second geological layer.

In some embodiments, the dynamic kernel mask is a binary mask for isolating data points of a same continuous zone.

In some embodiments, the dynamic kernel mask prevents calculations from being performed based on numerical values from non-continuous zones.

In some embodiments, the dynamic kernel mask includes a plurality of kernel masks applicable for each of a plurality of positions of a kernel applied to the input geological feature data.

In some embodiments, the interpreted data includes source data of one or more of borehole images, seismic data, or contextual data.

In some embodiments, the interpreted data is generated based on manual interpretation of the source data to identify the fault data and the geological feature data.

In some embodiments, the fault data is identified based on identifying an outcrop in the source data.

In some embodiments, the geological feature is a horizon between two geological layers.

In some embodiments, the plurality of horizon picks of the geological feature data are sparce. For example, the plurality of horizon picks may be positioned no more than once per meter. In another example, horizon picks indicating a geological feature (e.g., a horizon or layer) may be sparse in that less than 100% of the geological feature is demarked by the horizon picks. For example, between 20% and 100% of the geological feature may be indicated by the horizon picks. In another example, less than 20% of the geological feature is indicated by the horizon picks. In some embodiments, the interpreted data may be sparse. For example, only 10% or less of the interpreted data (e.g., an image) may include a measurement or value. For instance, about 10% or less of the interpreted data (e.g., image) may include measurement values, and the remaining portion of the interpreted data may include empty cells, pixels, voxels, or other empty data points.

In some embodiments, the fault data indicates a discontinuity in the geological feature.

In some embodiments, the interpreted data is 2-dimensional image data. In some embodiments, interpreted data is 3-dimensional image data.

In some embodiments, the fault data is represented as a fault image.

In some embodiments, the fault image defines at least two continuous zones positioned on either side of the at least one fault.

In some embodiments, the fault image identifies pixels from a same continuous zone with a same integer value.

In some embodiments, the at least two continuous zones are identified in the fault image based on a ray tracing method.

In some embodiments, pixels of the fault image that are adjacent to and on opposite sides of the at least one fault are identified by different integer values.

In some embodiments, the plurality of horizon picks includes a first set of horizon picks indicating a first subsurface geological feature and a second set of horizon picks indicating a second subsurface geological feature.

In some embodiments, the geological model is a geophysical model indicating properties of an underground formation.

In some embodiments, the geological model indicates layers one or more layers of the underground formation.

In some embodiments, the geological model is 3-dimensional.

In some embodiments, the first subsurface geological feature is a first horizon of a first geological layer, and wherein the second subsurface geological feature is a second horizon of a second geological layer.

In some embodiments, the horizon-fault machine learning model is generated to apply a dynamic kernel to process the input geological feature data.

In some embodiments, a dimensionality of the dynamic kernel changes one or more times as the horizon-fault machine learning model sequentially applies the dynamic kernel to data points of the input geological feature data.

In some embodiments, the masking by the dynamic kernel changes one or more times during convolutional layers of the horizon-fault machine learning model.

In some embodiments, the masking by the dynamic kernel changes one or more times during pooling layers of the horizon-fault machine learning model.

In some embodiments, the geological feature data is densified based on the locations of the n closest data points having numerical values in a same continuous zone.

In some embodiments, n is an integer number no less than 50.

In some embodiments, for a given data point, if the number of closest data points having numerical values in the same continuous zone is less than n, padding is implemented so that inputs for the given data point are of a threshold size or dimensionality.

In some embodiments, based on the dynamic kernel, the horizon-fault machine learning model implements no more than 1 million parameters.

In some embodiments, based on the dynamic kernel, the horizon-fault machine learning model implements about 10,000 parameters.

In some embodiments, the horizon-fault machine learning model is generated to apply the dynamic kernel mask at one or more neural network layers.

In some embodiments, the horizon-fault machine learning model is generated to apply the dynamic kernel mask at each convolution layer.

In some embodiments, the horizon-fault machine learning model is generated to apply the dynamic kernel mask at each pooling layer.

In some embodiments, the dynamic kernel mask is determined based on the following formula:

$$W_{masked} = W \circ M$$

$$X_{out} = \frac{K^2}{\sum M}(W_{masked}X_{kernel} + b)$$

where $W$, $W_{masked}$ are the unmasked and masked weights of the kernel. M is the binary mask. $K$ is the size of kernel. $X_{kernel}$ is the input value of the kernel. $b$ is the bias.

In some embodiments, the dynamic kernel mask is generated and applied for a forward calculation of each data point in the input geological feature data.

In some embodiments, the dynamic kernel mask is unique for at least some data points in the input geological feature data.

In some embodiments, the dynamic kernel mask is a binary mask for isolating data points of a same continuous zone.

In some embodiments, the dynamic kernel mask prevents calculations from being performed based on numerical values from non-continuous zones.

In some embodiments, the dynamic kernel mask is defined as:

$$M_{ij} = \begin{cases} 1, if\ the\ pixel\ is\ in\ the\ same\ continuous\ zone\ as\ the\ central\ pixel \\ 0, if\ the\ pixel\ is\ not\ in\ the\ same\ continuous\ zone\ as\ the\ central\ pixel. \end{cases}$$

In some embodiments the dynamic kernel mask is a weighted mask for weighting together numerical values of a same continuous zone.

In some embodiments, the method further includes generating a plot, graph, or other visual representation of the geological model.

In some embodiments, the method further includes presenting the geological model via a graphical user interface of a client device.

In some embodiments, the method further includes providing the geological model for simulating fluid flow of a formation.

In some embodiments, the method further includes providing the geological model for creating or adjusting a drilling plan for a wellbore.

In some embodiments, the method further includes providing the geological model for creating or adjusting a trajectory of a wellbore.

In some embodiments, the method further includes providing the geological model for adjusting one or more drilling parameters of a downhole tool for forming a wellbore.

In some embodiments, the horizon interpolation machine learning model is generated based on a loss model configured to prevent geologically irrational results in the interpolated continuous geological features.

In some embodiments, the geologically irrational results include one or more closed-shape horizons.

In some embodiments, the loss model is a topological loss model.

In some embodiments, topological loss model implements persistent homology and/or a persistence diagram.

In some embodiments, the persistent homology is computed through filtration. In some embodiments, a homology is computed based on a scalar function $\mu(x)$ and a threshold $\varepsilon$; a segmentation mask is generated based on extracting data points x, where $\mu(x) \leq \varepsilon$; as $\varepsilon$ increases, one or more features is observed including one or more of: one or more horizon lines being connected; one or more closed-shape horizons being disconnected; or one or more closed-shape horizons being filled in; and based on a persistence diagram of the one or more features, the topological loss model indicates one or more topological errors for backpropagating to train the horizon interpolation machine learning model.

In some embodiments, the topological loss model implements Morse theory and/or field reconstruction.

In some embodiments, the topological loss model represents the continuous geological features as a scalar field and identifies one or more closed-shape horizons based on identifying one or more critical points in the scalar field.

In some embodiments, the one or more critical points includes one or more local maxima, local minimum, or saddle points.

In some embodiments, the topological loss model weights the one or more closed-shape horizons for backpropagating to train the horizon interpolation machine learning model for preventing the geologically irrational results in the continuous geological features.

In some embodiments, the continuous geological features are one or more layers of a formation.

In some embodiments, at least one layer of the one or more layers of the formation has a non-uniform width.

In some embodiments, the geological model is 2-dimensional and the horizon interpolation machine learning model is generated to interpolate the continuous geological features in 2-dimensional space.

In some embodiments, the geological model is 3-dimensional and the horizon interpolation machine learning model is generated to interpolate the continuous geological features in 3-dimensional space.

The embodiments of the subsurface modeling system have been primarily described with reference to wellbore drilling operations. The subsurface modeling system described herein may be used in applications other than the drilling of a wellbore. In other embodiments, the subsurface modeling system according to the present disclosure may be used outside a wellbore or other downhole environment used for the exploration or production of natural resources. For instance, the subsurface modeling system of the present disclosure may be used in a borehole used for placement of utility lines. Accordingly, the terms "wellbore," "borehole" and the like should not be interpreted to limit tools, systems, assemblies, or methods of the present disclosure to any particular industry, field, or environment.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one embodiment to another. Moreover, it should be appreciated that such a development effort might be complex and time consuming, but would nevertheless be a routine undertaking of design, fabrication, and manufacture for those of ordinary skill having the benefit of this disclosure.

Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the embodiments that falls within the meaning and scope of the claims is to be embraced by the claims.

The terms "approximately," "about," and "substantially" as used herein represent an amount close to the stated amount that is within standard manufacturing or process tolerances, or which still performs a desired function or achieves a desired result. For example, the terms "approximately," "about," and "substantially" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements. Additionally, as used herein, the term "and/or" includes any and all combinations of one or more of the associated listed items.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1.  A method (900) of modeling subsurface geology, comprising:

    receiving (910) interpreted data (836) including:

    fault data (840) indicating at least one fault within the interpreted data (836); and
    geological feature data (838) including a plurality of horizon picks (837) indicating a subsurface geological feature;

    based on the fault data, creating (920) a dynamic kernel mask (842);
    generating (930) a geological model (834) using a horizon-fault machine learning (ML) model (748) that is generated to process input geological feature data (846) to predict continuous geological features across subsurface discontinuities based on applying the dynamic kernel mask (842) to isolate continuous zones in the input geological feature data (846); and
    providing (940) the geological model (834) for simulating one or more properties of a geological feature indicated in the geological feature data (838).

2.  The method of Claim 1, wherein the geological feature data of the interpreted data is sparse geological feature data, and wherein the input geological feature data is densified geological feature data generated based on interpolating the plurality of horizon picks to populate the densified geological feature data.

3.  The method of Claim 1 or 2, wherein the horizon-fault machine learning model is a convolutional neural network (CNN) having a U-Net architecture with 3 levels.

4.  The method of any of Claims 1-3, wherein the interpreted data includes source data of one or more of borehole images, seismic data, or contextual data and the geological feature is a horizon between two geological layers.

5.  The method of any of Claims 1-4, wherein the plurality of horizon picks are positioned no more than once per meter.

6. The method of any of Claims 1-5, wherein the fault data indicates a discontinuity in the geological feature and the fault data defines at least two continuous zones positioned on either side of the discontinuity.

7. The method of any of Claims 1-6, wherein the plurality of horizon picks includes a first set of horizon picks indicating a first subsurface geological feature and a second set of horizon picks indicating a second subsurface geological feature.

8. The method of Claim 7, wherein the first subsurface geological feature is a first horizon of a first geological layer, and wherein the second subsurface geological feature is a second horizon of a second geological layer.

9. The method of any of Claims 1-8, wherein, based on the dynamic kernel mask, the horizon-fault machine learning model implements no more than 1 million parameters.

10. The method of any of Claims 1-9, wherein the horizon-fault machine learning model is generated to apply the dynamic kernel mask at each convolution layer.

11. The method of any of Claims 1-10, wherein the dynamic kernel mask is a binary mask for isolating data points of a same continuous zone.

12. The method of Claim 11, wherein the dynamic kernel mask prevents calculations from being performed based on numerical values from non-continuous zones.

13. The method of any of Claims 1-12, wherein the dynamic kernel mask includes a plurality of kernel masks applicable for each of a plurality of positions of a kernel applied to the input geological feature data.

14. A system, comprising:

   a processor;
   memory in electronic communication with the processor; and
   instruction stored in the memory which, when executed by the processor, cause the processor to perform operations of a method according to any one of the preceding Claims.

15. A computer-readable storage medium having instruction stored thereon which, when executed by a processor, cause the processor to perform operations of a method according to any one of the Claims 1-13.

FIG. 1

200

Client Device *112*

Client Application
*118*

Network
*116*

Server Device *114*

Subsurface
Modelling System
*120*

FIG. 2A

Subsurface Modeling System *120*

Data Interpretation Manager *122*

Dynamic Kernel Manager *124*

Geological Data Densifier *126*

Machine Learning Model Manager *128*

Loss Model Manager *130*

Data Storage *132*

Geological Models *134*

Interpreted Data *136*

Sparse Geological Feature Data *138*

Fault Data *140*

Kernel Masks *142*

Continuous Zones *144*

Densified Geological Feature Data *146*

Horizon-Fault Machine Learning Models *148*

Target Imaging Data *150*

FIG. 2B

Geological Models  *334*

Interpreted Data  *336*

Sparse Geological Feature Data  *338*

337

337

Fault Data  *340*

FIG. 3

FIG. 4A

FIG. 4B

C1

C2

C3

Fault Data _540_

Continuous Zone Maps _543_

C1

C2

C3

# FIG. 5

$$x_{ij} = [v_1, d_1, v_2, d_2, \ldots v_n, d_n]$$

Continuous Zone Maps _643_

C1

C2

C3

Sparse Geological Feature Data _638_

Densified Geological Feature Data _646_

**FIG. 6**

FIG. 7A

Loss Model  _762_

Topological Loss  _768_

769

766(1)                    766(2)

# FIG. 7B

FIG. 8A

FIG. 8B

900

Receiving interpreted data including fault data and geological feature data ~910

Creating a dynamic kernel mask ~920

Generating a geological model using a horizon-fault machine learning model ~930

Providing the geological model for simulating one or more properties of a geological feature ~940

# FIG. 9

1000

| Memory *1003* | | Input Device(s) *1011* |
| --- | --- | --- |
| Instructions *1005* | | |
| Data *1007* | | Output Device(s) *1013* |

| Processor *1001* | Display Device *1015* |

| Communication Interface(s) *1009* | Display Controller *1017* |

1019

# FIG. 10

Europäisches
Patentamt

European
Patent Office

Office européen
des brevets

# EUROPEAN SEARCH REPORT

**Application Number**

EP 25 17 8051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/413173 A1 (JIANG FAN [US] ET AL) 29 December 2022 (2022-12-29) * paragraphs [0001], [0002], [0027] - [0059]; figures 4, 7 * | 1-15 | INV. G01V1/30 G01V20/00 |
| A | US 2021/247534 A1 (BØ TROND HELLEM [NO]) 12 August 2021 (2021-08-12) * paragraphs [0059] - [0064], [0157] - [0171]; figures 1-8 * | 1-15 | |
| A | ZHANG HAO ET AL: "SaltISCG: Interactive Salt Segmentation Method Based on CNN and Graph Cut", IEEE TRANSACTIONS ON GEOSCIENCE AND REMOTE SENSING, IEEE, USA, vol. 60, 5 May 2022 (2022-05-05), pages 1-14, XP011908493, ISSN: 0196-2892, DOI: 10.1109/TGRS.2022.3172997 [retrieved on 2022-05-05] * page 1 - page 10 * | 1-15 | |

**TECHNICAL FIELDS SEARCHED (IPC)**

G01V

The present search report has been drawn up for all claims

| Place of search | Date of completion of the search | Examiner |
|---|---|---|
| The Hague | 18 September 2025 | Vollmer, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8051

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | Publication date | Patent family member(s) | | Publication date |
|---|---|---|---|---|
| US 2022413173 A1 | 29-12-2022 | GB | 2621507 A | 14-02-2024 |
| | | NO | 20231245 A1 | 13-11-2023 |
| | | US | 2022413173 A1 | 29-12-2022 |
| | | WO | 2022271191 A1 | 29-12-2022 |
| US 2021247534 A1 | 12-08-2021 | CA | 3103234 A1 | 19-12-2019 |
| | | CN | 112424646 A | 26-02-2021 |
| | | EP | 3811119 A1 | 28-04-2021 |
| | | US | 2021247534 A1 | 12-08-2021 |
| | | WO | 2019241062 A1 | 19-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63650261